(19) Europäisches Patentamt
European Patent Office
Office européen des brevets

(11) **EP 3 177 421 B1**

(12) **EUROPÄISCHE PATENTSCHRIFT**

(45) Veröffentlichungstag und Bekanntmachung des Hinweises auf die Patenterteilung:
**20.03.2019 Patentblatt 2019/12**

(21) Anmeldenummer: **15744951.3**

(22) Anmeldetag: **04.08.2015**

(51) Int Cl.:
*B23K 7/00* (2006.01)    *B23K 10/00* (2006.01)
*B23K 31/10* (2006.01)    *B23K 37/04* (2006.01)
*B23K 26/38* (2014.01)

(86) Internationale Anmeldenummer:
**PCT/EP2015/068003**

(87) Internationale Veröffentlichungsnummer:
**WO 2016/020411 (11.02.2016 Gazette 2016/06)**

(54) **PROZESS UND SCHNEIDVORRICHTUNG ZUR TRENNENDEN BEARBEITUNG EINES WERKSTÜCKS**

PROCESS AND CUTTING DEVICE FOR SEPARATING A WORKPIECE

PROCÉDÉ ET DISPOSITIF DE COUPE DESTINÉ À DIVISER UNE PIÈCE À USINER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.08.2014 EP 14179948**

(43) Veröffentlichungstag der Anmeldung:
**14.06.2017 Patentblatt 2017/24**

(73) Patentinhaber: **WSoptics GmbH**
**86972 Altenstadt (DE)**

(72) Erfinder:
• **SEPP, Florian**
**86972 Altenstadt (DE)**
• **WEISS, Christoph**
**86971 Peiting (DE)**

(74) Vertreter: **Gebauer, Dieter Edmund**
**Splanemann**
**Patentanwälte Partnerschaft**
**Rumfordstraße 7**
**80469 München (DE)**

(56) Entgegenhaltungen:
**WO-A1-2009/093899    DE-A1-102012 212 566**
**DE-B3-102012 212 718    US-B1- 6 609 044**

**Beschreibung**

Die Erfindung betrifft einen Prozess und eine Schneidvorrichtung zur trennenden (thermischen) Bearbeitung eines beispielsweise platten- oder rohrförmigen Werkstücks mit wenigstens einem auszuschneidenden Werkstückteil.

Im Handel verfügbare Laserschneidvorrichtungen mit einem verfahrbaren Schneidkopf ermöglichen eine automatisierte Fertigung von Werkstückteilen in großer Stückzahl und mit hoher Präzision. Beim Ausschneiden der Werkstückteile aus einem Werkstück kann das Problem auftreten, dass ein ausgeschnittenes Werkstückteil relativ zum Werkstück verkippt. Dies kann zu einer Kollision mit dem Schneidkopf oder zu Problemen beim Entladen der Maschine, beispielsweise durch eine Automatisierungskomponente, führen.

Eine häufige Ursache für das Verkippen eines freigeschnittenen Werkstückteils ist das beim Laser- oder Plasmaschneiden eingesetzte Arbeitsgas, welches dazu dient, die Schmelze aus der Schnittfuge zu treiben. So wird beim Freischneiden das Werkstück mit dem Gasdruck des Arbeitsgases beaufschlagt, was dazu führt, dass auf das ausgeschnittene Werkstückteil eine Kraft ausgeübt wird, durch die sogar ein auf der Werkstückauflage statisch stabil gelagertes Werkstückteil verkippen kann. Bislang wird das Problem des Verkippens gelöst durch Fixieren der fast vollständig freigeschnittenen Werkstückteile durch "Microjoints", bei denen es sich um schmale Verbindungsstege zum übrigen Werkstück (Restgitter) handelt. Das Setzen der Microjoints verhindert ein Verkippen der ausgeschnittenen Werkstückteile. Die Microjoints werden nach Abarbeiten aller Werkstückteile zum Freilegen der Werkstückteile aufgetrennt. Das Auftrennen der Microjoints kann manuell oder maschinell erfolgen, wobei gegebenenfalls eine Nachbearbeitung der Schnittkanten erforderlich ist. Der Einsatz von Microjoints ist demnach zeitlich aufwändig. Zudem ist es bei Werkstückteilen mit kleinen Toleranzen manchmal nicht möglich, Microjoints zu verwenden.

Das US-Patent Nr. 6, 609, 044 B1 zeigt ein Verfahren zum Ausschneiden von Werkstückteilen aus einem Werkstück, wobei die Werkstückteile ohne eine Höhenänderung des Schneidkopfes ausgeschnitten werden. Eine Kollision des Schneidkopfes mit ausgeschnittenen Werkstückteilen wird durch Umfahren der ausgeschnittenen Werkstückteile erreicht, wobei ein zeitoptimierter Verfahrweg des Schneidkopfes erreicht werden soll. Optional, wenn ein Überfahren eines ausgeschnittenen Werkstückteils nicht vermieden werden kann, ist eine Auf- bzw. Abwärtsbewegung des Schneidkopfes vorgesehen. Dieser Druckschrift kann nicht explizit entnommen werden, dass nach dem Ausschalten des Laserstrahls eine Vergrößerung des vertikalen Abstands des Schneidkopfes zur Werkstückoberfläche nach vorgeschalteter Verfahrphase ohne Vergrößerung des vertikalen Abstands von Schneidkopf zu Werkstückoberfläche erfolgt. Für die Bearbeitungszeit ergibt sich kein Unterschied, ob die Vergrößerung des vertikalen Abstands von Schneidkopf zu Werkstückoberfläche unmittelbar nach Ausschalten des Laserstrahls oder erst nach einer ersten Verfahrphase ohne Vergrößerung des vertikalen Abstands von Schneidkopf zu Werkstückoberfläche erfolgt. Allerdings steigt das Risiko einer Kollision des Schneidkopfes mit einem ausgeschnittenen Werkstückteil, wenn zuerst ohne Höhenänderung des Schneidkopfes verfahren wird. Insofern ist es naheliegend, dass unmittelbar nach Ausschalten des Laserstrahls der Schneidkopf hochgefahren wird.

Demgegenüber besteht die Aufgabe der vorliegenden Erfindung darin, herkömmliche Schneidverfahren zur trennenden Bearbeitung von Werkstücken in vorteilhafter Weise so weiterzubilden, dass die Gefahr des Verkippens von Werkstückteilen vermindert wird. Diese und weitere Aufgaben werden nach dem Vorschlag der Erfindung durch einen Prozess und eine Schneidvorrichtung mit den Merkmalen der nebengeordneten Patentansprüche gelöst. Vorteilhafte Ausgestaltungen der Erfindung sind durch die Merkmale der Unteransprüche angegeben.

Erfindungsgemäß ist ein Prozess zur trennenden (thermischen) Bearbeitung eines beispielsweise platten- oder rohrförmigen Werkstücks mit mindestens einem auszuschneidenden Werkstückteil gezeigt. Durch das erfindungsgemäße Verfahren wird mindestens ein Werkstückteil aus dem Werkstück ausgeschnitten, wobei ein restliches Werkstück (hier und im Weiteren als "Restwerkstück" bezeichnet) verbleibt. Typischer Weise wird eine Mehrzahl von Werkstückteilen aus dem Werksstück ausgeschnitten.

Das mindestens eine ausgeschnittene Werkstückteil kann relativ zum restlichen Werkstück verkippbar sein, wobei das zu bearbeitende Werkstück auf einer beispielsweise ebenen Werkstückauflage gelagert ist, das eine Mehrzahl von Auflageelementen umfasst. Die Auflageelemente haben beispielsweise eine längliche Form und können zueinander parallel angeordnet sein. Einander benachbarte Auflageelemente sind durch eine Lücke bzw. Vertiefung voneinander beabstandet. Dies hat zur Folge, dass das ausgeschnittene Werkstückteil verkippen kann, wobei es in eine Lücke zwischen benachbarten Auflageelementen gerät und relativ zum restlichen Werkstück nach oben absteht. Bei dem auszuschneidenden Werkstückteil kann es sich insbesondere um ein auf den Auflageelementen statisch stabil gelagertes Werkstückteil handeln, da selbst ein statisch stabiles Werkstückteil durch den Gasdruck des Arbeitsgasstrahls verkippen kann.

In dem erfindungsgemäßen Prozess wird das mindestens eine auszuschneidende Werkstückteil in einem Schneidprozess entlang einer (geschlossenen) Schneidkontur S mittels eines Schneidstrahls, beispielsweise ein Laserstrahl, ausgeschnitten. Hierbei wird durch den Schneidstrahl ein Schnittspalt erzeugt, wobei die Schneidkontur S als Rand des ausgeschnittenen Werkstückteils verbleibt. Der Schnittspalt wird somit werkstückteilseitig von der Schneidkontur S und restwerkstückseitig von einer Schneidkontur S' des Restwerkstücks begrenzt, wobei die Schneidkontur S' des Restwerkstücks zur Schneidkontur S des Werkstückteils komplementär ausgebildet ist. Der Schnittspalt weist eine Spaltbreite auf, die sich senkrecht zur Schneidkontur S des Werkstückteils bemisst. Während des Schneidprozesses zum Ausschneiden des Werkstückteils wird der Schneidstrahl um die halbe Spaltbreite des Schnittspalts versetzt entlang der Schneidkontur S geführt (das heißt, der Schneidstrahl wird in Richtung des Restwerkstücks senkrecht weg von der Schneidkontur S um die halbe Spaltbreite versetzt) . Das Freischneiden bzw. Lösen des Werkstückteils vom Restwerkstück erfolgt durch vollständiges Ausbilden des geschlossenen Schnittspalts, das heißt dem vollständigen Durchtrennen des Werkstücks entlang der gesamten Schneidkontur S des Werkstückteils an einer Konturstelle der Schneidkontur S (hier und im Weiteren als "Freischneidpunkt FP" bezeichnet).

Der Schneidstrahl wird durch einen Schneidkopf geführt und tritt an einer endständigen Düse, die mit einer Düsenöffnung versehen ist, aus. Die Düse hat typischer Weise, jedoch nicht zwingend, eine radialsymmetrische Außengeometrie und verjüngt sich beispielsweise kegelförmig zum Werkstück bzw. zur Werkstückauflage hin. Die Düsenöffnung ist typischer Weise, jedoch nicht zwingend, rund ausgebildet. Der Schneidstrahl tritt typischer Weise aus der Düsenmitte aus und ist bei einer eine radialsymmetrische Außensymmetrie aufweisenden Düse typischer Weise parallel zur Symmetrieachse der Düse geführt.

Der Schneidkopf dient auch zum Führen eines Arbeitsgasstrahls, der typischer Weise, jedoch nicht zwingend, aus derselben Düse wie der Schneidstrahl abgegeben wird und vorzugsweise koaxial zum Schneidstrahl geführt ist. Der aus der Düse des Schneidkopfs (z. B. in Schneidposition) austretende Arbeitsgasstrahl ist typischer Weise, jedoch nicht zwingend, in Form eines sich (z.B. zur Werkstückoberfläche hin) verbreiternden Gaskegels ausgebildet. Der Gaskegel hat eine radialsymmetrische Form mit einer (kegelmittigen) Symmetrieachse. Typischer Weise verfügt die Düse zur Erzeugung des Gaskegels eine radialsymmetrische Innengeometrie, wobei die Symmetrieachse des kegelförmigen Arbeitsgasstrahls der Symmetrieachse der Innengeometrie der Düse entspricht. Bei einer Düse mit radialsymmetrischer Außengeometrie ist die Symmetrieachse der Außengeometrie der Düse typischer Weise identisch mit der Symmetrieachse der radialsymmetrischen Innengeometrie der Düse. Der Gaskegel weist einen relativ zur Symmetrieachse des Gaskegels sich bemessenden (von Null verschiedenen) Austrittswinkel $\alpha$ auf. In der Praxis liegt der **Ö**ffnungswinkel $\alpha$ meist im Bereich von 0° bis 30° und beträgt typischer Weise 10° bis 15°. Der in Form eines Gaskegels aus der Düse austretende Arbeitsgasstrahl und der Schneidstrahl sind vorzugsweise koaxial ausgerichtet, wobei der Schneidstrahl typischer Weise der Symmetrieachse des Gaskegels folgt.

Der Schneidkopf kann durch eine Relativbewegung zwischen Schneidkopf und Werkstück in eine Position relativ zum Werkstück gebracht werden, in der eine trennende Bearbeitung des Werkstücks möglich ist (hier und im Weiteren als "Schneidposition" bezeichnet). In Schneidposition befindet sich der Schneidkopf in einer für den Schneidprozess geeigneten Höhe über dem Werkstück, das heißt, zwischen Schneidkopf und einer dem Schneidkopf gegenüberliegenden Werkstückoberfläche liegt ein für die trennende Bearbeitung geeigneter (von Null verschiedener) vertikaler Abstand vor, bei dem sich das Werkstück im Fokus des Schneidstrahls befindet oder in den Fokus des Schneidstrahls (beispielsweise durch eine adaptive Optik) gebracht werden kann (hier und im Weiteren als "Schneidhöhe" bezeichnet). Wie oben erwähnt, weist das Werkstück eine dem Schneidkopf gegenüberliegende Oberfläche auf (hier und im Weiteren als "Werkstückoberfläche" bezeichnet), auf die der Schneid- und Arbeitsgasstrahl zur trennenden Bearbeitung des Werkstücks gerichtet werden können, wenn sich der Schneidkopf in Schneidposition befindet.

In einer ersten (Raum-)Zone (hier und im Weiteren als "Gasdruckzone" bezeichnet) weist der Arbeitsgasstrahl eine zur Werkstückoberfläche hin gerichtete Strahlrichtung auf, wobei der Arbeitsgasstrahl entweder senkrecht zur Werkstückoberfläche gerichtet ist oder zumindest eine von Null verschiedene (Strahl-)Richtungskomponente senkrecht zur Werkstückoberfläche hat. In der Gasdruckzone wird das Werkstück, insbesondere das auszuschneidende bzw. ausgeschnittene Werkstückteil, mit einem positiven Gas- bzw. Pressdruck (Überdruck) beaufschlagt. Der positive Gasdruck bemisst sich relativ zum Umgebungsdruck des Werkstücks, das heißt, der positive Gasdruck ergibt sich aus einer positiven Differenz zwischen dem durch den Gasstrahl auf das Werkstück ausgeübten Gasdruck der Gasstrahls und dem Umgebungsdruck. Durch den positiven Gasdruck wird eine (mechanische) Kraft auf das Werkstück, insbesondere das auszuschneidende bzw. ausgeschnittene Werkstückteil, ausgeübt, die zumindest eine (von Null verschiedene) Kraftkomponente aufweist, die senkrecht zum Werkstück hin gerichtet ist. Bei einem in Form eines sich radial weitenden Gaskegels aus der Düse austretenden Arbeitsgasstrahl ist die Gasdruckzone ein radialsymmetrischer, kegelförmiger Raumbereich zwischen der Düse und jenem Teil der Werkstückoberfläche, auf der der Arbeitsgasstrahl auftrifft.

Der auf die Werkstückoberfläche gerichtete Arbeitsgasstrahl wird von der Werkstückoberfläche umgelenkt, wobei durch den von der Werkstückoberfläche umgelenkten Arbeitsgasstrahl eine von der Gasdruckzone verschiedene zweite (Raum-) Zone gebildet wird (hier und im Weiteren als "Gassogzone" bezeichnet), in der der von der Werkstückoberfläche umgelenkte Arbeitsgasstrahl von der Werkstückoberfläche weg gerichtet ist und über eine von Null verschiedene (Strahl-)Richtungskomponente senkrecht zur Werkstückoberfläche verfügt. Der Arbeitsgasstrahl wird von der Werkstückoberfläche in Richtung vom Schneidstrahl weg umgelenkt. Bei einem in Form eines sich radial weitenden Gaskegels aus der Düse austretenden Arbeitsgasstrahl wird der Arbeitsgasstrahl nach radial außen (weg von der Symmetrieachse des Gaskegels) umgelenkt. Die durch den umgelenkten Arbeitsgasstrahl gebildete Gassogzone schließt sich an die Gasdruckzone räumlich an und ist gleichermaßen radialsymmetrisch, bezogen auf die Symmetrieachse des Gaskegels oder die Innengeometrie der Düse, ausgebildet.

Generell geht die Gasdruckzone mit zunehmendem Abstand von der Düsenmitte (bzw. Symmetrieachse des Gaskegels) in die Gassogzone über, wobei ein (in aller Regel sehr kleiner) Übergangsbereich zwischen Gasdruckzone und Gassogzone auftritt, bei dem der umgelenkte Arbeitsgasstrahl einen zur Werkstückoberfläche parallelen Verlauf hat und somit die durch den Arbeitsgasstrahl auf das Werkstück ausgeübte Kraft keine Richtungskomponente senkrecht zur Werkstückoberfläche aufweist.

In der Gassogzone wird das Werkstück, insbesondere das auszuschneidende bzw. ausgeschnittene Werkstückteil, durch den umgelenkten Arbeitsgasstrahl mit einem negativen Gasdruck (Unterdruck) beaufschlagt. Der auf das Werkstück, insbesondere das auszuschneidende bzw. ausgeschnittene Werkstückteil, ausgeübte negative Gasdruck bemisst sich relativ zum Umgebungsdruck des Werkstücks, das heißt, der negative Gasdruck ergibt sich aus einer negativen Differenz zwischen dem durch den umgelenkten Gasstrahl auf das Werkstück ausgeübten Gasdruck der Gasstrahls und dem Umgebungsdruck. Durch den negativen Gasdruck wird eine (mechanische) Kraft auf das Werkstück, insbesondere das auszuschneidende bzw. ausgeschnittene Werkstückteil, ausgeübt.

Die geometrischen Formen und Abmessungen von Gasdruckzone und Gassogzone hängen von verschiedenen Faktoren ab, beispielsweise Gasdruck, Austrittswinkel des Arbeitsgasstrahls aus der Düse in Schneidhöhe bei einem in Form eines sich verbreiternden Gaskegels ausgebildeten Arbeitsgasstrahl, Düseninnengeometrie, Geometrie der Werkstückoberfläche und Schneidhöhe, und können vom Fachmann bei einer konkreten Auslegung einer Schneidvorrichtung durch einfache Versuche ermittelt werden.

Generell und insbesondere bei einem in Form eines sich radial verbreiternden Gaskegels aus der Düse austretenden Arbeitsgasstrahl nimmt in radialer Richtung nach außen (weg von der Düsenmitte bzw. Symmetrieachse der Düse oder des Gaskegels), in der Gassogzone der negative Gasdruck zunächst ab und anschließend wieder zu, so dass der negative Gasdruck einen Minimalwert durchläuft. Ursache hierfür ist der grundsätzlich stetige Verlauf des Gasdrucks bei der Druckanpassung des negativen Gasdrucks an den Umgebungsdruck. Die Gassogzone weist somit einen Bereich auf, in dem der negative Gasdruck einen maximalen Absolutwert (Minimum) aufweist, wobei ein maximaler Sog auf das Werkstück, insbesondere das auszuschneidende bzw. ausgeschnittene Werkstückteil, ausgeübt wird.

Die Gassogzone weist generell einen Bereich (hier und im Weiteren als "Arbeitsbereich" bezeichnet) auf, in dem sich der negative Gasdruck um maximal 50% vom minimalen negativen Gasdruck der Gassogzone unterscheidet. Dies bedeutet, dass der negative Gasdruck im Arbeitsbereich höchstens die Hälfte des minimalen negativen Gasdrucks beträgt. Die Prozentangabe bezieht sich auf den minimalen negativen Gasdruck. Anders ausgedrückt heißt dies, dass der Absolutwert des negativen Gasdrucks im Arbeitsbereich mindestens halb so groß ist wie der Absolutwert des minimalen negativen Gasdrucks. Liegt im Minimum des Gasdrucks beispielsweise ein Gasdruck von -800 mbar (Millibar) vor, so liegt der negative Gasdruck im Arbeitsbereich in einem Wertebereich -800 mbar bis -400 mbar. Der Arbeitsbereich ist ein Bereich der Gassogzone, welcher den Bereich einschließt, in dem der negative Gasdruck ein Minimum hat. Vorzugsweise zeichnet sich der Arbeitsbereich dadurch aus, dass sich der negative Gasdruck um maximal 25%, vorzugsweise maximal 10%, vom minimalen negativen Gasdruck der Gassogzone unterscheidet. Bei einem in Form eines sich radial verbreiternden Gaskegels aus der Düse austretenden Arbeitsgasstrahl ist der Arbeitsbereich (entsprechend der Gassogzone) radialsymmetrisch ausgebildet und weist in der Projektion auf eine plane Werkstückoberfläche eine Ringform auf.

In dem erfindungsgemäßen Prozess können der Schneidkopf und das Werkstück relativ zueinander bewegt (verfahren) werden. Dies bedeutet, dass nur der Schneidkopf relativ zum räumlich unverändert (stationär) gehaltenen Werkstück verfahren wird, nur das Werkstück relativ zum räumlich unverändert (stationär) gehaltenen Schneidkopf verfahren wird, oder sowohl der Schneidkopf als auch das Werkstück relativ zum jeweils anderen verfahren werden. Erfindungsgemäß sind diese drei Möglichkeiten eine Relativbewegung von Schneidkopf und Werkstück zu erzeugen jeweils für sich alleine oder in Kombination vorgesehen. Hier und im Weiteren wird auf diese drei Möglichkeiten eine Relativbewegung von Schneidkopf und Werkstück zu erzeugen Bezug genommen durch die Formulierung, wonach der Schneidkopf und das Werkstück relativ zueinander verfahren (bewegt) werden.

Der erfindungsgemäße Prozess zur trennenden Bearbeitung eines Werkstücks weist die folgenden Schritte auf, die zeitlich nacheinander in der angegebenen Reihenfolge I-IV ausgeführt werden:

Schritt I:

In einem ersten Schritt werden der Schneidkopf und das Werkstück relativ zueinander so verfahren, dass der Schneidkopf in einer wahlfrei bestimmbaren bzw. bestimmten Schneidhöhe über dem Werkstück positioniert wird. Die Schneidhöhe bemisst sich durch den vertikalen Abstand des Schneidkopfs (beispielsweise der Düsenöffnung) vom Werkstück bzw. der Werkstückoberfläche des Werkstücks.

## Schritt II:

In einem zweiten Schritt wird das Werkstückteil vom Werkstück ausgeschnitten, wobei der Schneidstrahl, insbesondere Laserstrahl, entlang einer wahlfrei bestimmbaren bzw. bestimmten Schneidkontur S des Werkstückteils geführt wird. Zumindest während des Schneidprozesses wird der Arbeitsgasstrahl auf das Werkstück, insbesondere die Auftreff- bzw. Bearbeitungsstelle des Schneidstrahls, gerichtet. Das Freischneiden bzw. Lösen des Werkstückteils vom Restwerkstück (Restgitter) erfolgt, wenn der Schneidstrahl entlang der kompletten Schneidkontur S geführt ist, im Freischneidpunkt FP der Schneidkontur. Mit dem Freischneiden kann ein Verkippen eines selbst statisch stabilen Werkstückteils erfolgen, da das ausgeschnittene Werkstückteil im Bereich des Freischneidpunkts FP mit dem Gasdruck des auf die Werkstückoberfläche auftreffenden Arbeitsgasstrahls beaufschlagt wird. Durch Freischneiden des Werkstückteils am Freischneidpunkt wird der Schneidprozess des Werkstückteils beendet.

## Schritt III:

In einem dritten Schritt wird der Schneidstrahl, insbesondere Laserstrahl, ausgeschaltet. Beispielsweise wird der Schneidstrahl unmittelbar nach dem Freischneiden des Werkstückteils am Freischneidpunkt FP ausgeschaltet. Im Sinne vorliegender Erfindung meint die Formulierung "Ausschalten des Schneidstrahls" eine Verminderung der Intensität (Leistung) des Schneidstrahls derart, dass ein Durchtrennen des Werkstücks nicht mehr möglich ist. Beispielsweise, jedoch nicht zwingend, wird die Leistung (Intensität) des Schneidstrahls auf den Wert Null reduziert.

## Schritt IV:

In einem vierten Schritt werden der Schneidkopf und das Werkstück (nach Beendigung des Schneidprozesses des Werkstückteils sowie nach Ausschalten des Schneidstrahls) in einer ersten Verfahrphase und einer zweiten Verfahrphase, welche sich an die erste Verfahrphase anschließt, relativ zueinander verfahren. Die zweite Verfahrphase kann sich insbesondere zeitlich unmittelbar an die erste Verfahrphase anschließen und demnach sofort beginnen, wenn die erste Verfahrphase beendet ist. Die zweite Verfahrphase kann jedoch auch erst nach einer (von Null verschiedenen) zeitlichen Verzögerung nach Beendigung der ersten Verfahrphase beginnen.

In der ersten Verfahrphase, die beispielsweise unmittelbar nach dem Ausschalten des Schneidstrahls beginnt, werden der Schneidkopf und das Werkstück ohne eine Vergrößerung des vertikalen Abstands zwischen Schneidkopf und Werkstück relativ zueinander so verfahren, dass der Freischneidpunkt FP der Schneidkontur S des ausgeschnittenen Werkstückteils in die Gassogzone gelangt, so dass ein (durch den Gasdruck auf das Werkstückteil im Bereich des Freischneidpunkts verursachtes) Verkippen des ausgeschnittenen Werkstückteils durch den auf das ausgeschnittene Werkstückteil im Bereich des Freischneidpunkts einwirkenden Sog des von der Werkstückoberfläche umgelenkten Gasstrahls verhindert wird. Hierbei werden der Schneidkopf und das Werkstück relativ zueinander so verfahren, dass der Schneidkopf relativ zum Werkstück, ausgehend vom Freischneidpunkt (FP), in Richtung des Restwerkstücks bewegt wird. Der Schneidkopf wird also vom Freidschneidpunkt FP so weg bewegt, dass er zumindest eine Bewegungs- beziehungsweise Richtungskomponente aufweist, die am Freischneidpunkt FP senkrecht zur Schneidkontur S gerichtet ist und vom ausgeschnittenen Werkstückteil weg gerichtet ist (d.h. zum Restwerkstück hin gerichtet ist).

Wie bereits ausgeführt, nimmt die Sogwirkung in der Gassogzone in radialer Richtung nach außen zunächst zu bis eine maximale Sogwirkung erreicht wird und nimmt anschließend durch die sich radial verbreiternde Gasverteilung mit zunehmender radialer Entfernung von der Düse bis zum Erreichen des Umgebungsdrucks ab. Erfindungsgemäß wird diese Erkenntnis ausgenutzt, indem die erste Verfahrphase beendet wird, wenn eine besonders hohe Sogwirkung im Bereich des Freischneidpunkts auf das Werkstückteil einwirkt. Zu diesem Zweck werden der Schneidkopf und das Werkstück in der ersten Verfahrphase relativ zueinander nur so lange verfahren bis sich der Freischneidpunkt innerhalb des Arbeitsbereichs der Gassogzone befindet. Dies bedeutet, dass die erste Verfahrphase bzw. die Relativbewegung zwischen dem Schneidkopf und dem Werkstück beendet wird, wenn sich der Freischneidpunkt innerhalb des Arbeitsbereichs befindet. Wie Versuche der Erfinder gezeigt haben, weist der negative Gasdruck im Arbeitsbereich der Gassogzone einen für die praktische Anwendung vorteilhaft niedrigen Wert (d.h. hinreichend großen positiven Absolutwert) auf, durch den ein Verkippen des Werkstückteils durch den auf das ausgeschnittene Werkstückteil einwirkenden, relativ großen Gassog effektiv und zuverlässig verhindert werden kann.

In der sich an die erste Verfahrphase (insbesondere unmittelbar) anschließenden zweiten Verfahrphase werden der Schneidkopf und das Werkstück relativ zueinander so bewegt, dass der vertikale Abstand zwischen Schneidkopf und Werkstück vergrößert wird.

Demnach beginnt die erste Verfahrphase frühestens nach dem Ausschalten des Schneidstrahls, beispielsweise unmittelbar nach dem Ausschalten des Schneidstrahls, insbesondere unmittelbar nach dem Freischneiden des Werkstückteils (Beenden des Schneidens des Werkstückteils entlang der Schneidkontur im Freischneidpunkt) sowie Ausschalten des Schneidstrahls, und endet, sobald der Freischneidpunkt FP der Schneidkontur S des Werkstückteils im Arbeitsbereich der Gassogzone liegt. Durch Beenden der Relativbewegung zwischen Schneidkopf und Werkstück ohne gleichzeitige Vergrößerung des vertikalen Abstands des Schneidkopfes von der Werkstückoberfläche wird die erste Verfahrphase beendet. Die zweite Verfahrphase beginnt entweder unmittelbar nach Beendigung der ersten Verfahrphase oder mit einer zeitlichen Verzögerung nach Beendigung der ersten Verfahrphase, wobei bei einer zeitlichen Verzögerung zwischen der ersten Verfahrphase und der zweiten Verfahrphase keine Relativbewegung zwischen Schneidkopf und Werkstück vorliegt. Die zweite Verfahrphase beginnt, wenn eine sich an die erste Verfahrphase anschließende Relativbewegung zwischen Schneidkopf und Werkstück zu einer Vergrößerung des (vertikalen) Abstands zwischen Schneidkopf und Werkstückoberfläche führt. Die zweite Verfahrphase endet, wenn durch die Relativbewegung zwischen Schneidkopf und Werksstück der (vertikale) Abstand zwischen Schneidkopf und Werkstückoberfläche nicht mehr vergrößert wird, das heißt, wenn der Abstand zwischen Schneidkopf und Werkstückoberfläche gleich bleibt oder verringert wird, beispielsweise um den Schneidkopf neuerlich in eine (abgesenkte) Schneidposition zum Ausschneiden eines weiteren Werkstückteils aus dem Werkstück zu bringen.

Erfindungsgemäß werden der Schneidkopf und das Werkstück in der ersten Verfahrphase relativ zueinander solange verfahren bis sich der Freischneidpunkt der Schneidkontur des ausgeschnittenen Werkstückteils innerhalb des Arbeitsbereichs der Gassogzone befindet, so dass ein Verkippen des ausgeschnittenen Werkstückteils durch die Sogwirkung auf das ausgeschnittene Werkstückteil im Bereich des Freischneidpunkts verhindert wird. Die Wegstrecke s, entlang welcher der Schneidkopf in der ersten Verfahrphase relativ zum Werkstück zu bewegen ist, hängt von der Form und der Größe der Gasdruckzone ab.

Tritt der Arbeitsgasstrahl beispielsweise von einer in einer Schneidhöhe H über dem Werkstück positionierten Düse mit radialsymmetrischer Innenkontur in Form eines sich weitenden Gaskegels mit einem, beispielsweise auf die Symmetrieachse der Düse bezogenen, **Ö**ffnungswinkel $\alpha$ aus und hat die Düse eine runde Düsenöffnung zum Abgeben des Arbeitsgasstrahls mit einem Radius R und hat eine die Düsenöffnung formende Düsenwand eine radiale Breite W, so muss die Wegstrecke s, entlang der der Schneidkopf relativ zum Werkstück zu verfahren ist, größer sein als eine minimale Strecke $S_{min}$, die durch die nachfolgende Bedingung (i) gegeben ist:

$$(i) \quad s_{min} = max(tan\ \alpha\ x\ H,\ W)\ +\ R$$

Dies bedeutet, dass sich die minimale Strecke $S_{min}$ ergibt aus dem größeren Wert (max), gewählt aus einerseits dem Produkt des Tangens des Öffnungswinkel $\alpha$ des Gasaustrittskegels des Arbeitsgasstrahls und der Schneidhöhe H und andererseits der radialen Breite W der Düsenwand, zu welchem (größeren Wert) der Radius R der Düsenöffnung addiert wird. Falls das Produkt aus Tangens des Öffnungswinkel $\alpha$ des Gasaustrittskegels des Arbeitsgasstrahls und der Schneidhöhe H größer ist als die radiale Breite W der Düsenwand, bestimmt sich die minimale Strecke $S_{min}$ aus $S_{min} = tan\ \alpha\ x\ H + R$. Falls das Produkt aus Tangens des Öffnungswinkel $\alpha$ des Gasaustrittskegels des Arbeitsgasstrahls und der Schneidhöhe H kleiner ist als die radiale Breite W der Düsenwand, bestimmt sich die minimale Strecke $S_{min}$ aus $S_{min} = W + R$.

Wie Untersuchungen der Erfinder ergeben haben, ist es ausreichend zum Erfüllen vorstehender Bedingung (i), wenn die Wegstrecke s der Relativbewegung zwischen Schneidkopf und Werkstück in der ersten Verfahrphase dem 1 bis 30-fachen, vorzugsweise dem 1 bis 20-fachen, stärker bevorzugt dem 2 bis 10-fachen und noch stärker bevorzugt dem 2 bis 8-fachen der Schneidhöhe H entspricht. Eine typische Wegstrecke s in der ersten Verfahrphase liegt im Bereich von 2 bis 15 mm.

Erfindungsgemäß sind der Schneidkopf und das Werkstück in der ersten Verfahrphase relativ zueinander so (schnell) zu verfahren, dass ein durch den Gasdruck des Arbeitsgasstrahls im Freischneidpunkt verursachtes Verkippen des Werkstückteils durch die Sogwirkung auf das ausgeschnittene Werkstückteil im Bereich des Freischneidpunkts verhindert wird. Der Zeitraum, innerhalb dessen der Schneidkopf und das Werkstück relativ zueinander in der ersten Verfahrphase zu verfahren sind, hängt insbesondere von der Form und der Größe der Gasdruckzone sowie dem Gasdruck in der Gasdruckzone und dem auf das ausgeschnittene Werkstückteil durch den Gasdruck ausgeübten Moment (Kraft) ab.

Wie Untersuchungen der Erfinder ergeben haben, ist die vorstehende Bedingung (i) erfüllt, wenn bei einer typischen Wegstrecke s des Schneidkopfs in der ersten Verfahrphase von 2 bis 15 mm der Zeitraum für die erste Verfahrphase maximal 0,5 Sekunden, vorzugsweise maximal 0,4 Sekunden, stärker bevorzugt maximal 0,3 Sekunden, noch stärker bevorzugt maximal 0,2 Sekunden, und noch stärker bevorzugt maximal 0,1 Sekunden, jedoch mehr als 0 Sekunden, beträgt. Erfindungsgemäß ist es demnach vorteilhaft, wenn der Schneidkopf in der ersten Verfahrphase mit einer durchschnittlichen Geschwindigkeit von mindestens 30 mm/sec (Millimeter/Sekunde) relativ zum Werkstück bewegt wird, wobei die Relativbewegung zwischen Schneidkopf und Werkstück durch Verfahren von Schneidkopf und/oder Werkstück erreicht wird.

Wie die Erfinder in überraschender Weise erstmals erkannt haben, kann der in der Gassogzone auf das Werkstück einwirkende Sog bzw. Unterdruck gegenüber dem Umgebungsdruck, der durch den von der Werkstückoberfläche umgelenkten Arbeitsgasstrahl in Art eines Venturi-Effekts erzeugt wird, ausgenutzt werden, um dem zum Zeitpunkt des Freischneidens auf das Werkstückteil im Bereich des Freischneidpunkts einwirkenden Gasdruck des Arbeitsgasstrahls entgegenzuwirken und ein Verkippen des ausgeschnittenen Werkstückteils zu verhindern. Die Erfindung macht sich hierbei die Trägheit des ausgeschnittenen Werkstückteils zunutze, wobei ein durch den Pressdruck des Arbeitsgasstrahls beim Freischneiden verursachter Kippvorgang eines ausgeschnittenen Werkstückteils durch die gegensätzlich gerichtete Sogwirkung unterbunden wird. Aufgrund der Trägheit des ausgeschnittenen Werkstückteils ist eine zeitliche Verzögerung zwischen dem auf das Werkstückteil einwirkenden positiven Gasdrucks und negativen Gasdrucks unschädlich. Es ist lediglich dafür Sorge zu tragen, dass das ausgeschnittene Werkstückteil im Freischneidpunkt hinreichend schnell in den Arbeitsbereich der Gassogzone gelangt, so dass ein Verkippen des ausgeschnittenen Werkstückteils verhindert werden kann. Demnach lehrt die Erfindung eine völlige Abkehr von der herkömmlichen Vorgehensweise, bei der der Schneidkopf nach dem Freischneiden in aller Regel sofort nach oben verfahren wird, um den Schneidkopf möglichst schnell aus dem gefährlichen Kollisionsbereich, in dem eine Kollision des Schneidkopfs mit einem verkippten Bauteil möglich ist, zu bringen. Wie Untersuchungen der Erfinder gezeigt haben, kann durch das erfindungsgemäße Verfahren die Zahl der verkippten Werkstückteile erheblich reduziert werden.

Der vorteilhafte Effekt der Erfindung kann auch dann ausgenutzt werden, wenn der Arbeitsgasstrahl nach Beendigung des Schneidprozesses zeitgleich mit dem Schneidstrahl ausgeschaltet wird, da der Arbeitsgasstrahl erst mit einer gewissen Verzögerung nach dem Ausschalten des Arbeitsgasstrahls ausbleibt. In diesem Fall kann die verbleibende Sogwirkung des Arbeitsgasstrahls ausgenutzt werden. In vorteilhafter Weise ermöglicht diese Vorgehensweise eine besonders einfache Steuerung des Schneidprozesses, wobei der Ausschaltvorgang von Schneid- und Arbeitsgasstrahl gleichzeitig erfolgen kann.

Bei einer hierzu alternativen, vorteilhaften Ausgestaltung des erfindungsgemäßen Verfahrens wird Einfluss auf die zeitliche Dauer der Sogwirkung des Arbeitsgasstrahls genommen, indem der Arbeitsgasstrahl erst nach dem Schneidstrahl (d.h. mit einer von Null verschiedenen zeitlichen Verzögerung nach Ausschalten des Schneidstrahls) ausgeschaltet wird. Beispielsweise wird der Arbeitsgasstrahl mit einer zeitlichen Verzögerung von mindestens 0,05 Sekunden nach Ausschalten des Schneidstrahls ausgeschaltet. Bei einer Ausgestaltung der Erfindung wird der Arbeitsgasstrahl während, insbesondere am Ende, oder nach der ersten Verfahrphase ausgeschaltet. Bei einer weiteren Ausgestaltung der Erfindung wird der Arbeitsgasstrahl während, insbesondere am Ende, oder nach der zweiten Verfahrphase ausgeschaltet. Durch das, bezogen auf das Ausschalten des Schneidstrahls, zeitlich verzögerte Ausschalten des Arbeitsgasstrahls kann die Sogwirkung auf das ausgeschnittene Werkstückteil im Bereich des Freischneidpunkts in vorteilhafter Weise verlängert werden, so dass die Wahrscheinlichkeit des Verkippens eines Werkstückteils weiter verringert werden kann.

Bei einer weiteren, besonders vorteilhaften Ausgestaltung des erfindungsgemäßen Verfahrens werden der Schneidkopf und das Werkstück relativ zueinander so verfahren, dass sich der Freischneidpunkt zumindest während eines Teils der zweiten Verfahrphase, insbesondere während der vollständigen (gesamten) zweiten Verfahrphase, innerhalb des Arbeitsbereichs der Gassogzone befindet. Durch diese Maßnahme kann in besonders vorteilhafter Weise erreicht werden, dass auch in der zweiten Verfahrphase ein relativ großer Sog auf das ausgeschnittene Werkstückteil im Bereich des Freischneidpunkts ausgeübt wird, wodurch der Zeitraum der Sogwirkung insgesamt deutlich verlängert und die Zahl der verkippten Werkstückteile weiter vermindert werden kann. Dies gilt insbesondere dann, wenn der Schneidkopf und das Werkstück in der zweiten Verfahrphase relativ zueinander so verfahren werden, dass sich der Freischneidpunkt des Werkstückteils während der vollständigen (gesamten) zweiten Verfahrphase innerhalb des Arbeitsbereichs der Gassogzone befindet.

Gegeben sei der Fall, dass der Arbeitsgasstrahl von einer in Schneidhöhe H über dem Werkstück positionierten Düse mit einer radialsymmetrischen Innengeometrie in Form eines sich weitenden Gaskegels mit einem, beispielsweise auf die Symmetrieachse der Innengeometrie der Düse bezogenen, Öffnungswinkel $\alpha$ austritt. In diesem Fall kann zuverlässig und sicher erreicht werden, dass sich der Freischneidpunkt während der zweiten Verfahrphase innerhalb des Arbeitsbereichs der Gassogzone, sogar nahe dem Minimum des negativen Gasdrucks (Maximalwert des Absolutwerts des negativen Gasdrucks), befindet, wenn der Schneidkopf und das Werkstück relativ zueinander so bewegt werden, dass der Schneidkopf entlang einer Wegstrecke parallel zur Mantelfläche des durch den Öffnungswinkel $\alpha$ definierten Gaskegels des Arbeitsgasstrahls bewegt wird. Diese Parallelität wird erreicht, wenn der Schneidkopf und das Werkstück relativ zueinander so verfahren werden, dass der Schneidkopf mit einem auf die Symmetrieachse bezogenen Verfahrwinkel $\beta = 180° - \alpha$ bewegt wird. Der Winkel $\beta$ bemisst sich bei obiger Bemessungsregel in demselben Drehsinn wie der Winkel $\alpha$. Durch diese Maßnahme kann ein Verkippen des Werkstückteils besonders effektiv und zuverlässig verhindert werden. Hierdurch kann sichergestellt werden, dass sich der Freischneidpunkt FP während eines Teils oder der gesamten zweiten Verfahrphase innerhalb des Arbeitsbereichs der Gassogzone und insbesondere sogar in der Nähe des Minimums des negativen Gasdrucks befindet.

Bei einer weiteren vorteilhaften Ausgestaltung des erfindungsgemäßen Verfahrens werden der Schneidkopf und das Werkstück relativ zueinander so verfahren, dass der Schneidkopf in der ersten Verfahrphase keine (nennenswerte) Veränderung des vertikalen Abstands vom Werkstück erfährt. Hierdurch kann in vorteilhafter Weise erreicht werden, dass der Freischneidpunkt besonders schnell aus der Gasdruckzone und in den Unterdruck der Gassogzone

7

gelangt. Bei einer hierzu alternativen Ausgestaltung des erfindungsgemäßen Verfahrens werden der Schneidkopf und das Werkstück relativ zueinander so bewegt, dass der vertikale Abstand des Schneidkopfs von der Werkstückoberfläche verringert wird. Hierdurch kann in besonders vorteilhafter Weise eine Vergrößerung der Sogwirkung in der Gassogzone auf das ausgeschnittene Werkstückteil im Bereich des Freischneidpunkts erreicht werden, wodurch ein Verkippen des Werkstückteils besonders effektiv und zuverlässig verhindert werden kann.

Bei einer weiteren vorteilhaften Ausgestaltung des erfindungsgemäßen Verfahrens werden der Schneidkopf und das Werkstück relativ zueinander so verfahren, dass der Schneidkopf in der ersten Verfahrphase senkrecht zur Schneidkontur S des Werkstückteils bzw. senkrecht zur komplementären Schneidkontur S' des Restwerkstücks vom Freischneidpunkt weg in Richtung des Restwerkstücks bewegt wird. Durch diese Maßnahme kann das ausgeschnittene Werkstückteil in vorteilhafter Weise besonders schnell aus dem Einflussbereich der Gasdruckzone und in den Einflussbereich der Gassogzone gebracht werden.

Die Erfindung erstreckt sich weiterhin auf eine Schneidvorrichtung, insbesondere Laserschneidvorrichtung, zur trennenden Bearbeitung eines beispielsweise platten- oder rohrförmigen Werkstücks. Die Schneidvorrichtung umfasst eine Schneideinrichtung mit einem Schneidkopf zur Führung eines Schneidstrahls zur trennenden Bearbeitung des Werkstücks und eines Arbeitsgasstrahls über das Werkstück, einen Arbeitstisch mit einer Werkstückauflage für das Werkstück, wobei die Werkstückauflage eine Vielzahl von Auflageelementen aufweist, wobei zwischen zwei einander benachbarten Auflageelementen eine Lücke gebildet wird, sowie eine elektronische Steuereinrichtung zur Steuerung/Regelung der trennenden Bearbeitung des Werkstücks, welche zur Durchführung des oben beschriebenen, erfindungsgemäßen Prozesses (programmtechnisch) eingerichtet ist.

Ferner erstreckt sich die Erfindung auf einen Programmcode für eine zur Datenverarbeitung geeignete elektronische Steuereinrichtung für eine solche Schneidvorrichtung, insbesondere Laserschneidvorrichtung, zur trennenden Bearbeitung eines beispielsweise platten- oder rohrförmigen Werkstücks, welcher Steuerbefehle enthält, die die Steuereinrichtung zur Durchführung des oben beschriebenen, erfindungsgemäßen Prozesses veranlassen.

Des Weiteren erstreckt sich die Erfindung auf ein Computerprogrammprodukt (Speichermedium) mit einem gespeicherten Programmcode für eine zur Datenverarbeitung geeignete elektronische Steuereinrichtung für eine solche Schneidvorrichtung, insbesondere Laserschneidvorrichtung, zur trennenden Bearbeitung eines beispielsweise platten- oder rohrförmigen Werkstücks, welcher Steuerbefehle enthält, die die Steuereinrichtung zur Durchführung des oben beschriebenen, erfindungsgemäßen Prozesses veranlassen.

Es versteht sich, dass die vorstehend genannten Ausgestaltungen der Erfindung in Alleinstellung oder in beliebiger Kombination einsetzbar sind, ohne den Rahmen der vorliegenden Erfindung zu verlassen.

Kurze Beschreibung der Zeichnungen

Die Erfindung wird nun anhand eines Ausführungsbeispiels näher erläutert, wobei Bezug auf die beigefügten Figuren genommen wird. Es zeigen:

Fig. 1    eine schematische perspektivische Darstellung einer Laserschneidvorrichtung;

Fig. 2    die Laserschneidvorrichtung von Fig. 1 mit einer auf die Werkstückauflage aufgelegten Blechtafel;

Fig. 3    eine vergrößerte Detailansicht von Fig. 2 zur Veranschaulichung eines verkippten Blechteils;

Fig. 4    eine schematische Darstellung zur Veranschaulichung der an einem statisch stabilen Werkstückteil auftretenden Momente;

Fig. 5    eine schematische Darstellung des Lichtstrahls und Arbeitsgasstrahls beim Laserschneiden mit einer typischen Gasdruckverteilung;

Fig. 6    eine schematische Darstellung der bislang typischer Weise eingesetzten Verfahrbewegung des Schneidkopfs nach dem Freischneiden eines Werkstückteils;

Fig. 7    eine schematische Darstellung der Verfahrbewegung des Schneidkopfs entsprechend dem erfindungsgemäßen Prozess;

Fig. 8    ein Flussdiagramm des erfindungsgemäßen Prozesses.

Ausführliche Beschreibung der Zeichnungen

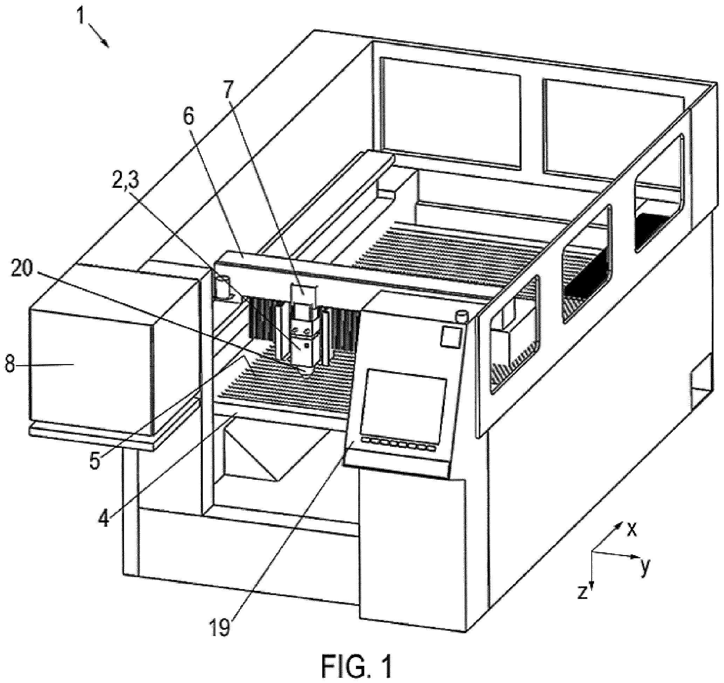

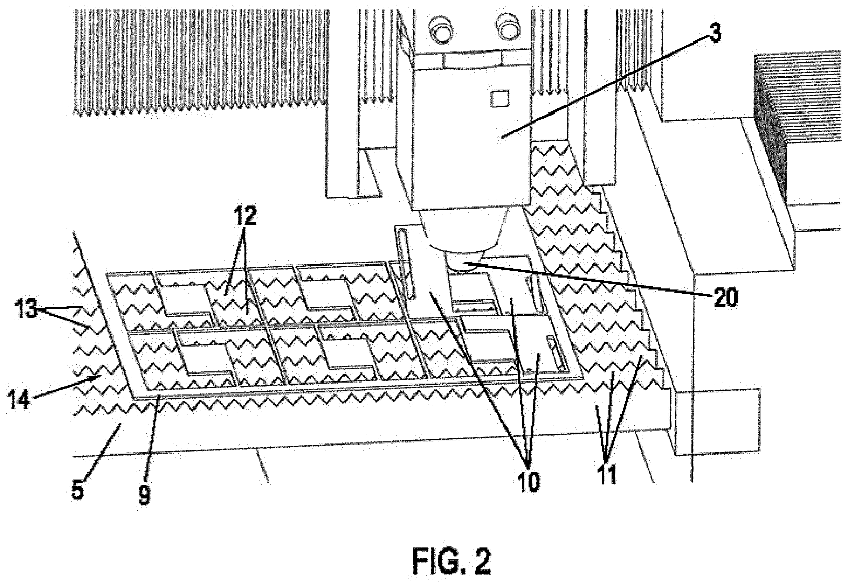

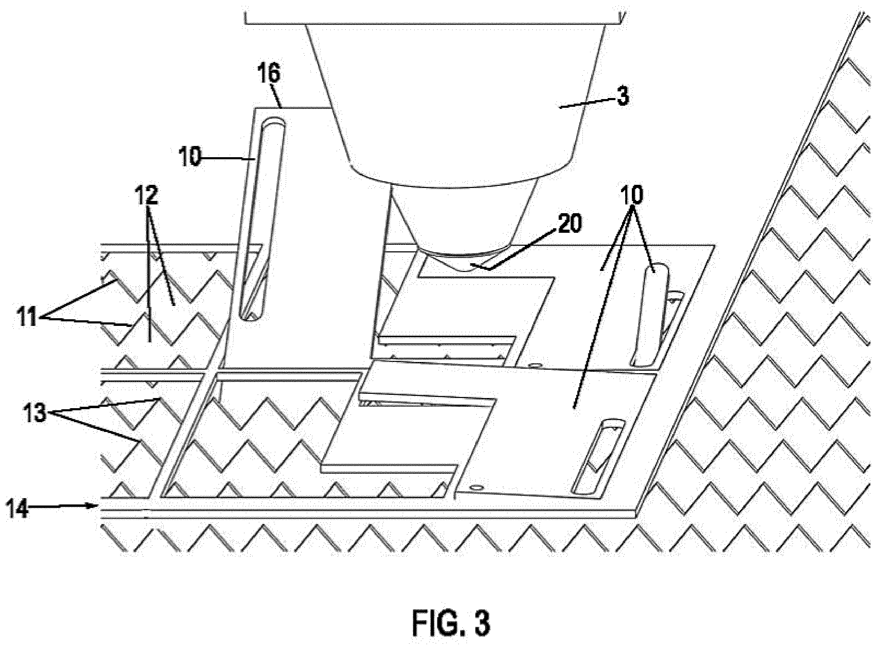

Sei zunächst Figur 1 betrachtet, worin eine an sich bekannte Laserschneidvorrichtung zum Schneiden von platten- oder rohrartigen Werkstücken veranschaulicht ist. Die insgesamt mit der Bezugszahl 1 bezeichnete Laserschneidvorrichtung umfasst eine Schneideinrichtung 2 mit einem Schneidkopf 3, sowie einen Arbeitstisch 4 mit einer Werkstückauflage 5 für ein Werkstück 9 (siehe Figuren 2 und 3), beispielsweise eine ebene Blechtafel oder ein Blechrohr. Die Werkstückauflage 5 wird von einem Querträger 6 überspannt, der entlang einer ersten Achsrichtung (x-Richtung) verfahrbar geführt ist. Am Querträger 6 ist ein Führungsschlitten 7 für den Schneidkopf 3 montiert, der am Querträger 6 entlang einer zur ersten Achsrichtung (x-Richtung) senkrechten zweiten Achsrichtung (y-Richtung) verfahrbar geführt ist. Der Schneidkopf 3 kann somit in einer durch die beiden Achsrichtungen (x-, y-Richtung) aufgespannten Ebene parallel zur beispielsweise horizontalen Werkstückauflage 5 relativ zum Werkstück 9 verfahren werden. Der Schneidkopf 3 ist weiterhin in einer zur ersten und zweiten Achsrichtung senkrechten, dritten Achsrichtung (z-Richtung) höhenverfahrbar ausgebildet, wodurch der Abstand senkrecht zur Werkstückauflage 5 verändert werden kann. Bei einer horizontalen Werkstückauflage 5 entspricht die z-Richtung der Schwerkraftrichtung.

Wie in den Figuren 2, 3 und 5 gezeigt, weist der Schneidkopf 3 auf seiner der Werkstückauflage 5 zugewandten Seite eine sich zur Werkstückauflage 5 hin kegelförmig verjüngende Düse 20 mit einer runden Düsenöffnung 22 auf. Der Schneidkopf 3 dient zum Führen eines Laserstrahls 15 sowie eines Arbeitsgasstrahls 21. Der Laserstrahl 15 dient zur trennenden Bearbeitung des Werkstücks 9 mit einer dem Schneidkopf 3 gegenüberliegenden Werkstückoberfläche 23. Er wird von einer Laserstrahlquelle 8 (siehe Figur 1) erzeugt und beispielsweise durch ein Strahlführungsrohr und mehrere Umlenkspiegel zum Schneidkopf 3 geführt. Über eine Fokussierlinse oder adaptive Optik kann der Laserstrahl 15 in gebündelter Form auf das Werkstück 9 gerichtet werden. Aufgrund der Verfahrbarkeit des Schneidkopfs 3 entlang der ersten Achsrichtung (x-Richtung) und zweiten Achsrichtung (y-Richtung) kann mit dem Laserstrahl 15 jeder beliebige Punkt am Werkstück 9 angefahren werden. Durch die Höhenverfahrbarkeit des Schneidkopfs 3 in z-Richtung kann über eine Änderung des Abstands zur Werkstückoberfläche 23 der Arbeitsabstand der Düse 20 zum Werkstück 9 eingestellt werden. Der Abstand des Schneidkopfs 3 von der Werkstückoberfläche 23, insbesondere die Schneidhöhe, kann vor, während und nach dem Schneidprozess eingestellt werden. Eine trennende Bearbeitung des Werkstücks 9 kann insbesondere mit einer variablen Schneidhöhe innerhalb eines Schneidhöhenbereichs durchgeführt werden. Die Fokuslage des Laserstahls kann über optische Elemente im Schneidkopf 3, beispielsweise eine adaptive Optik, eingestellt werden. Eine programmgesteuerte Steuereinrichtung 19 dient zur Steuerung/Regelung der trennenden Bearbeitung des Werkstücks 9.

Wie eingangs bereits erwähnt, dient der Arbeitsgasstrahl 21 dazu, die Schmelze aus der Schnittfuge zu treiben. Der Arbeitsgasstrahl 21 wird von einer nicht näher dargestellten Gasstrahlerzeugungseinrichtung erzeugt. Als inertes Arbeitsgas wird beispielsweise Helium (He), Argon (Ar) oder Stickstoff ($N_2$) eingesetzt. Als reaktives Arbeitsgas wird üblicherweise Sauerstoff ($O_2$) verwendet. Bekannt ist auch die Verwendung von Gasgemischen. Der Arbeitsgasstrahl 21 tritt aus derselben Düse 20 durch die Düsenöffnung 22 wie der Laserstrahl 15 aus und wird koaxial zum Laserstrahl 15 an die Bearbeitungsstelle geführt und trifft dort mit einem von der Gasstrahlerzeugungseinrichtung vorgegebenen (initialen) Gasdruck auf der Werkstückoberfläche 23 des Werkstücks 9 auf.

In Figur 2 ist die Werkstückauflage 5 mit dem beispielsweise als Blechtafel ausgebildeten Werkstück 9 vergrößert dargestellt. In dem gezeigten Ausführungsbeispiel besteht die Werkstückauflage 5 aus einer Vielzahl von Auflageelementen 11 mit beispielsweise dreieckig ausgebildeten Tragpunktspitzen 13, welche gemeinsam die oben erwähnte Auflageebene 14 für das zu bearbeitende Werkstück 9 definieren. Die Auflageelemente 11 sind hier beispielsweise als längliche Auflagestege ausgeführt, die sich jeweils entlang der y-Richtung erstrecken und mit einem beispielsweise konstanten Zwischenabstand in paralleler Anordnung entlang der x-Richtung nebeneinander liegend angeordnet sind, so dass jeweils zwischen zwei einander benachbarten Auflageelementen 11 eine Lücke 12 gebildet wird. Die Auflageelemente 11 sind hier beispielsweise plattenförmig ausgebildet, wobei deren Flächen jeweils parallel zur y-z-Ebene angeordnet sind. Die Auflageelemente 11 sind in einem vorbestimmten Raster zueinander angeordnet, so dass die Position der Tragpunktspitzen 13 ermittelt werden kann. Nicht näher dargestellt ist eine Absaugeinrichtung, durch welche während des Laserschneidens entstehender Schneidrauch, Schlackepartikel und kleine Abfallteile abgesaugt werden können.

Da die Werkstückauflage 5 das Werkstück 9 nicht vollflächig unterstützt, sondern nur an den Tragpunktspitzen 13, können frei geschnittene Werkstückteile 10 relativ zum Werkstück 9 beziehungsweise zur Auflageebene 14 verkippen, wobei die Werkstückteile 10 abschnittsweise in die Lücken 12 zwischen den Auflageelementen 11 gelangen und hierbei nach oben wegstehen. Ob ein ausgeschnittenes Werkstückteil 10 verkippt oder nicht, hängt von der Größe des Werkstückteils 10 sowie der Anzahl und den Positionen der das Werkstückteil 10 stützenden Tragpunktspitzen 13 ab.

Wie in der vergrößerten Darstellung von Figur 3 veranschaulicht, besteht die Gefahr, dass der Schneidkopf 3 beim Verfahren mit einen verkippten Werkstückteil 10 kollidiert. Zwar kann der Schneidkopf 3 mit einer entsprechend großen Verfahrhöhe das verkippte Werkstückteil 10 überfahren, jedoch muss der Schneidkopf 3 meist in einer relativ niedrigen Schneidhöhe positioniert werden, so dass eine Kollision mit dem verkippten Werkstückteil 10 möglich ist.

Grundsätzlich hängt eine Kollision zwischen einem verkippten Werkstückteil 10 und dem Schneidkopf 3 von den Abmessungen des Schneidkopfs 3 in Schneidhöhe und der Kipphöhe des Werkstückteils 10 ab. In dem gezeigten Ausführungsbeispiel steht ein Seitenrand 16 des rechteckigen Werkstückteils 10 im Vergleich zum Restwerkstück 9' nach oben vor, wobei sich ein gegenüberliegender Seitenrand des Werkstückteils 10 in einer Lücke 12 befindet.

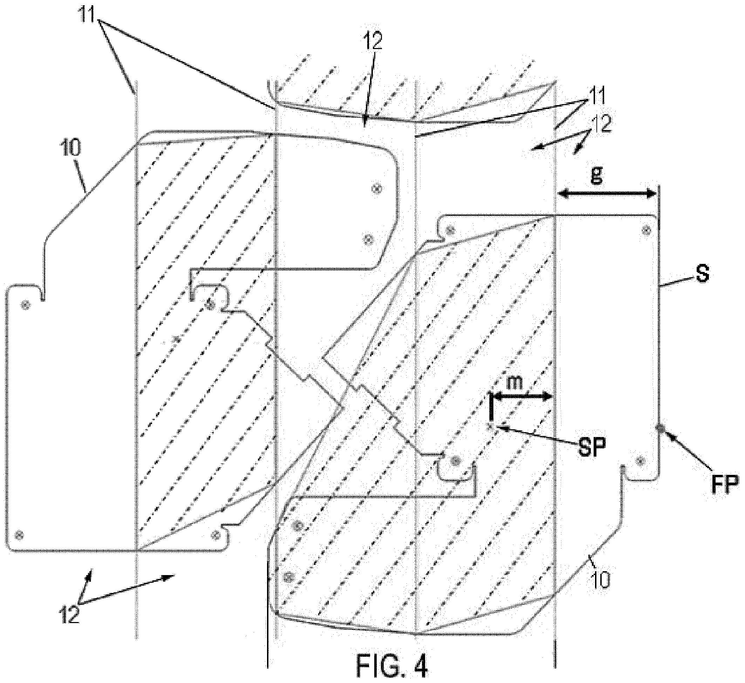

Statisch instabile Werkstückteile 10 können nach dem Freischneiden allein durch die Schwerkraft verkippen. Jedoch können selbst statisch stabile Werkstückteile 10 durch den Gasdruck des Arbeitsgasstrahls 21 zum Verkippen gebracht werden. Hierzu sei Figur 4 betrachtet, worin ein Werkstück 9 mit mehreren auszuschneidenden Werkstückteilen 10 auf parallelen, stegartigen Auflageelementen 11 dargestellt ist. Durch die schraffierten Auflageflächen sind die sich aus den Auflagestellen ergebenden Liegepolygone der Werkstückteile 10 gekennzeichnet. Mit dem Begriff "Liegepolygon" wird die konvexe Hülle aller Punkte bezeichnet, in denen ein Werkstückteil 10 ein Auflageelement 11 berührt, wobei eine idealisierte Betrachtung in der Werkstückebene erfolgt. Das Liegepolygon hat die Eigenschaft, dass es genau aus den Punkten besteht, für die gilt, dass eine von oben senkrecht auf die Werkstückebene wirkende Kraft, in unserem Fall eine aus dem Gasdruck resultierende Kraft, nicht zum Verkippen des Werkstückteils 10 führen kann.

Für ein statisch stabiles Werkstückteil 10 sind beispielhaft der Schwerpunkt SP sowie ein Freischneidpunkt FP von dessen Schneidkontur S angegeben. Wird das Werkstückteil 10 am Freidschneidpunkt FP vom Restgitter losgelöst, wirkt durch den Arbeitsgasstrahl eine durch den Gasdruck verursachte Kraft auf das Werkstückteil 10 ein, welche ein Kippmoment um das zwischen Schwerpunkt SP und Freischneidpunkt FP liegende Auflageelement 11 verursacht. Das Kippmoment auf das freigeschnittene Werkstückteil 10 ergibt sich aus dem Produkt aus der Kraft durch den Gasdruck und dem Hebelarm g, welcher gegeben ist durch den senkrechten Abstand zwischen dem Freischneidpunkt FP und dem zwischen dem Schwerpunkt SP und Freischneidpunkt FP liegenden Auflageelement 11. Dem Kippmoment entgegen wirkt ein statisch stabilisierendes Moment, welches sich ergibt aus der Gewichtskraft des Werkstückteils 10 im Schwerpunkt SP und dem Hebelarm m, welcher gegeben ist durch den senkrechten Abstand zwischen dem Schwerpunkt SP und dem zwischen Schwerpunkt SP und Freischneidpunkt FP liegenden Auflageelement 11. Typischer Weise ist das Kippmoment größer als das Moment der Gewichtskraft, so dass das Werkstückteil 10 durch den Druck des Arbeitsgases verkippt.

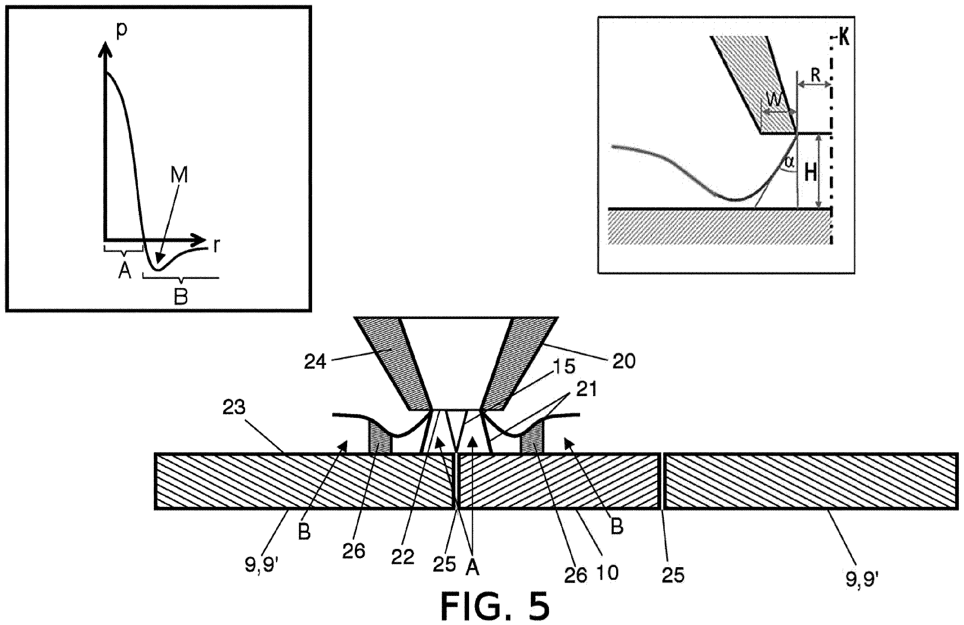

Es wird nun Bezug auf Figur 5 genommen, worin die Düse 20 des Schneidkopfs 3 zum Führen des Laserstrahls 15 und des Arbeitsgasstrahls 21 in schematischer Weise dargestellt ist. Die Düse 20 des Schneidkopfs 3 liegt der Werkstückoberfläche 23 des Werkstücks 9 gegenüber. Der Laserstrahl 15 und der Arbeitsgasstrahl 21 sind koaxial geführt und treten jeweils aus der Düsenöffnung 22 aus, wobei der Laserstrahl 15 und der Arbeitsgasstrahl 21 auf die Werkstückoberfläche 23 gerichtet sind. Der Laserstrahl 15 wird entlang der Schneidkontur S des Werkstückteils 10 geführt, um einen Schnittspalt 25 in dem Werkstück 9 zu erzeugen und das Werkstückteil 10 aus dem Werkstück 9 zu schneiden. Der in Form eines sich weitenden (radialsymmetrischen) Gaskegels ausgebildete Arbeitsgasstrahl 21 ist mit seiner Symmetrieachse auf die Bearbeitungsstelle des Laserstrahls 15 gerichtet, um die Schmelze aus dem Schnittspalt 25 zu treiben. Zu diesem Zweck trifft der Arbeitsgasstrahl 21 typischer Weise mit einem Gasdruck von mehreren bar (beispielsweise 15 bis 20 bar) auf der Werkstückoberfläche 23 auf.

In der Einfügung rechts oben sind die geometrischen Zusammenhänge angegeben. Demnach weist die Düse 20 beispielsweise eine radialsymmetrische, zum Werkstück 9 hin sich verjüngende Kegelform auf. Die Symmetrieachse K der Düse 20 ist durch die strichpunktierte Linie angedeutet. Die Düse 20 ist in einem der Schneidhöhe H entsprechenden Abstand, bei dem der Laserstrahl 15 auf die Mitte des Schnittspalts 25 fokussiert ist, angeordnet. Die Schneidhöhe H liegt typischer Weise im Bereich von 0,3 bis 2 Millimeter (mm). Die durch die Düsenwand 24 geformte runde Düsenöffnung 22 hat einen Radius R, die radiale Wandbreite der die Düsenöffnung 22 formenden Düsenwand 24 ist durch die Abmessung W gegeben. Der Düsenradius R liegt typischer Weise im Bereich von 0,3 bis 1,5 Millimeter (mm). Die Düse 20 weist eine radialsymmetrische (kegelförmige) Innengeometrie auf. Der Arbeitsgasstrahl 21 weist ein radialsymmetrisches, hier beispielsweise sich kegelförmig weitendes Strömungsprofil auf. Der Gaskegel ist mit einem Öffnungswinkel $\alpha$ zur Senkrechten auf die Werkstückoberfläche 23 bzw. zur Symmetrieachse K geneigt. Der Öffnungswinkel $\alpha$ des Gaskegels liegt typischer Weise im Bereich von 0 bis 45°. Der Arbeitsgasstrahl 21 wird von der Werkstückoberfläche 23 seitlich umgelenkt, wie durch den Randbereich des Arbeitsgasstrahls 21 schematisch angedeutet ist. Durch den auf das Werkstück 9 gerichteten Arbeitsgasstrahl 21 wird ein positiver Gasdruck auf das Werkstück 9 ausgeübt. In der durch den auf das Werkstück 9 gerichteten Arbeitsgasstrahl 21 gebildeten Gasdruckzone weist der Arbeitsgasstrahl 21 eine von Null verschiedene Strömungs- bzw. Richtungskomponente senkrecht zur Werkstückoberfläche 23 hin auf. Die Werkstückoberfläche 23 wird somit in der Gasdruckzone mit einem Überdruck gegenüber dem Umgebungsdruck beaufschlagt. Die Gasdruckzone ist in Figur 5 mit "A" gekennzeichnet. In der durch den umgelenkten Arbeitsgasstrahl 21 gebildeten Gassogzone wird das Werkstück 9 durch den Arbeitsgasstrahl 21 mit einem negativen Gasdruck beziehungsweise Unterdruck (Sog) gegenüber dem Umgebungsdruck beaufschlagt. In der Gassogzone weist der von der Werkstückoberfläche 23 umgelenkte Arbeitsgasstrahl 21 eine von Null verschiedene Strömungs- bzw. Richtungskomponente senkrecht weg von der Werkstückoberfläche 23 auf. Die Gassogzone ist in Figur 5 mit "B" gekennzeichnet. Die Gasdruckzone A geht in radialer Richtung nach außen (von der Symmetrieachse K weg) in die Gassogzone B über, wobei der umgelenkte Arbeitsgasstrahl 21 in einem nicht näher dargestellten (sehr engen) Übergangsbereich einen parallelen Verlauf zur Werkstückoberfläche 23 hat. Dort wird keine Kraft senkrecht zur Werkstückoberfläche 23 auf das Werkstück 9 ausgeübt.

In der Einfügung links oben ist der durch den Arbeitsgasstrahl 21 auf das Werkstück 9 ausgeübte (Gas-)Druck p in Abhängigkeit des radialen Abstands r von der Symmetrieachse K angegeben. Der Ursprung des skizzierten Koordinatensystems liegt dabei bezüglich der Abszisse in der Symmetrieachse K. Bezüglich der Ordinate entspricht der Ursprung dem Umgebungsdruck, so dass der Gasdruck relativ zum Umgebungsdruck angegeben ist. Ein positiver Gasdruck entspricht einem Überdruck gegenüber Umgebungsdruck, ein negativer Gasdruck einem Unterdruck gegenüber Umgebungsdruck. Der Gasdruck p entspricht der auf das Werkstück 9 ausgeübten mechanischen Kraft. Somit wird bei dem gezeigten Aufbau von Figur 1 durch einen positiven Gasdruck eine Kraft in z-Richtung, d.h. in Schwerkraftrichtung, auf das Werkstück 9 ausgeübt, wohingegen durch einen negativen Gasdruck eine Kraft entgegen der z-Richtung, d.h. entgegen der Schwerkraftrichtung, auf das Werkstück 9 ausgeübt wird.

Wie aus dem Diagramm ersichtlich, hat der Gasdruck p in einem der Gasdruckzone A entsprechenden Bereich einen positiven Wert (d.h. es liegt ein positiver Gasdruck p vor), wobei der positive Gasdruck, ausgehend von der Symmetrieachse K mit zunehmendem radialen Abstand r von der Symmetrieachse K von einem durch die Gasstrahlerzeugungseinrichtung vorgegebenen positiven Maximalwert abnimmt bis er gleich dem Umgebungsdruck wird. In der Gasdruckzone A wirkt auf das Werkstück 9 ein Überdruck ein. Mit weiter zunehmendem radialen Abstand r nimmt der Gasdruck p relativ zum Umgebungsdruck negative Werte an (entsprechend einem auf das Werkstück 9 wirkenden Unterdruck), erreicht einen Minimalwert M und nimmt dann wieder zu, bis er zu Null wird (das heißt, ein Druckausgleich mit dem Umgebungsdruck erfolgt). Dieser Bereich entspricht der Gassogzone B. Somit schließt sich die Gassogzone B in radialer Richtung an die Gasdruckzone A an, wobei die Gasdruckzone A über einen engen Übergangsbereich, in dem die Strahlrichtung des umgelenkten Arbeitsgasstrahls 21 parallel zur Werkstückoberfläche 23 ist (Gasdruck p = 0), in die Gassogzone B übergeht.

Zwangsläufig weist der Gasdruck p in der Gassogzone B durch seinen stetigen Verlauf ein Minimum M auf, wobei die Gassogzone B dementsprechend über einen nicht näher bezeichneten Zonenbereich verfügt, in dem der negative Gasdruck p minimal ist. Entsprechend dem Verlauf des Gasdrucks p in der Gassogzone B nimmt die Sogwirkung auf das Werkstück 9 mit zunehmendem radialen Abstand r zunächst zu und anschließend wieder ab, wobei an der Stelle des Minimalwerts des Gasdrucks p eine maximale Sogwirkung (maximaler Unterdruck) auf das Werkstück 9 ausgeübt wird. In Fig. 5 ist ein Zonenbereich 26 der Gassogzone B dargestellt, welcher eingangs als "Arbeitsbereich" bezeichnet wurde. Der Zonen- bzw. Arbeitsbereich 26 umfasst den Minimalwert des Gasdrucks p und zeichnet sich dadurch aus, dass sich der negative Gasdruck p um maximal 50%, vorzugsweise um maximal 25%, stärker bevorzugt um maximal 10%, (des Betrags des Minimalwerts M) vom Minimalwert M des negativen Gasdrucks p unterscheidet.

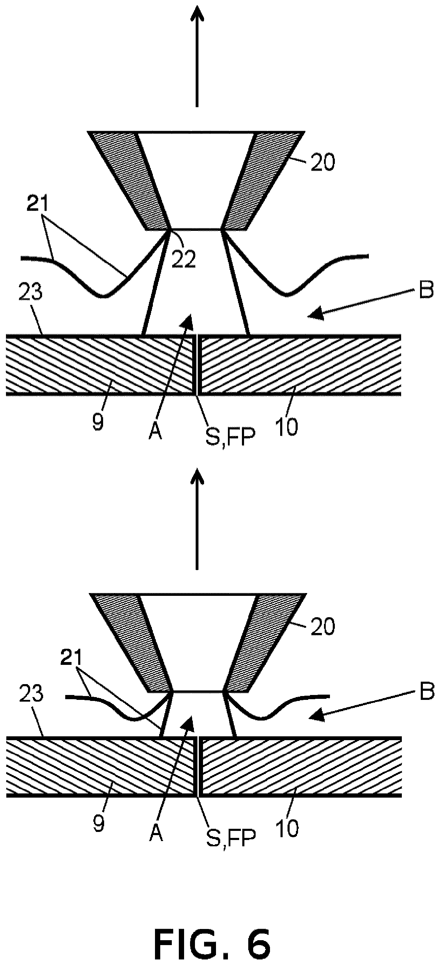

Es wird nun Bezug auf Figur 6 genommen, worin anhand einer schematischen Darstellung die im Stand der Technik typischer Weise eingesetzte Verfahrbewegung des Schneidkopfs 3 unmittelbar nach dem Freischneiden eines Werkstückteils 10 aus dem Werkstück 9 veranschaulicht ist. Der Schneidkopf 3 entspricht jenem von Figur 5, wobei zum Zwecke einer einfacheren Darstellung der Laserstrahl 15 nicht dargestellt ist. Die Schneidkontur S ist im Bereich des Freischneidpunkts FP gezeigt. In der zeitlichen Abfolge ist Figur 6 von unten nach oben zu betrachten.

Demnach wird, wie durch den Pfeil angegeben, der Schneidkopf 3 unmittelbar nach dem Freischneiden des Werkstückteils 10 vertikal bzw. senkrecht zur Werkstückoberfläche 23 nach oben verfahren, um den Schneidkopf 3 möglichst schnell aus dem Gefahrenbereich, in dem eine Kollision mit dem verkippten Werkstückteil 10 möglich ist, zu bewegen. Die Schneidkontur S im Bereich des Freischneidpunkts FP befindet sich bei der Verfahrbewegung des Schneidkopfs 3 im Bereich des Austrittskegels des aus der Düse 20 austretenden Arbeitsgasstrahls 21 und somit innerhalb der Gasdruckzone A. Zwar wird der Arbeitsgasstrahl 21 oftmals zeitgleich mit dem Laserstrahl 15 ausgeschaltet, jedoch strömt das Arbeitsgas noch eine gewisse Zeit nach, so dass das ausgeschnittene Werkstückteil 10 mit dem Gasdruck des nachströmenden Arbeitsgasstrahls 21 weiter beaufschlagt wird, so dass ein Verkippen des Werkstückteils 10 wahrscheinlich ist.

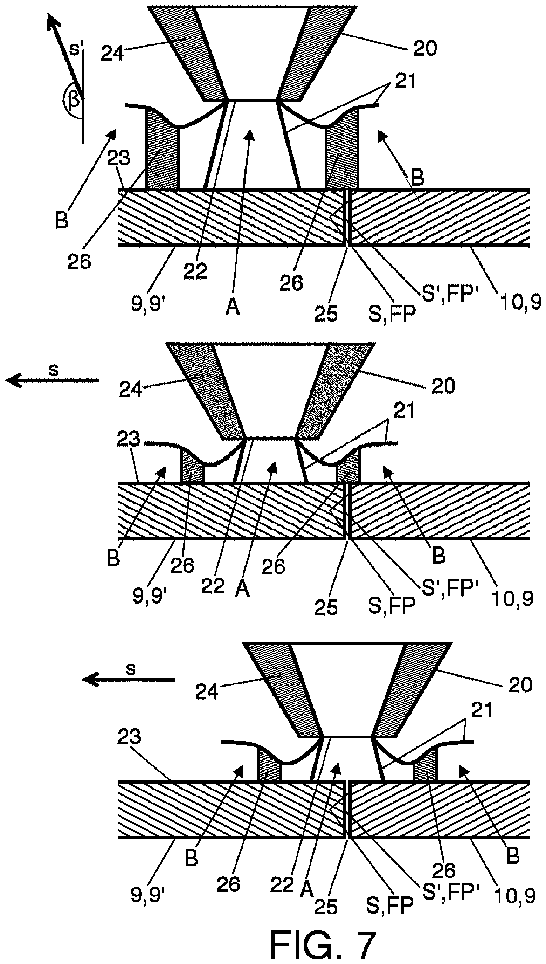

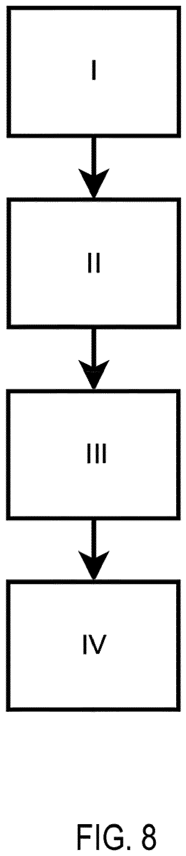

Es wird nun Bezug auf die Figuren 7 und 8 genommen, worin ein Ausführungsbeispiel des erfindungsgemäßen Prozesses veranschaulicht ist. Es wird für Figur 7 wiederum Bezug auf die schematische Darstellung von Figur 5 genommen, wobei zum Zwecke einer einfacheren Darstellung der Laserstrahl 15 nicht dargestellt ist. Die Schneidkontur S ist im Bereich des Freischneidpunkts FP gezeigt. In der zeitlichen Abfolge ist Figur 7 von unten nach oben zu betrachten.

Demnach wird in einem ersten Schritt I der Schneidkopf 3 in einer Schneidhöhe H über dem Werkstück 9 positioniert, um das Werkstückteil 10 entlang der Schneidkontur S aus dem Werkstück 9 auszuschneiden (untere Abbildung).

Anschließend wird in einem zweiten Schritt II das Werkstückteil 10 entlang der Schneidkontur S mit dem Laserstrahl 15 aus dem Werkstück 9 ausgeschnitten, wobei durch den Laserstrahl 15 ein Schnittspalt 25 erzeugt wird. Der kegelförmige Arbeitsgasstrahl 21 ist während des kompletten Schneidprozesses auf die Werkstückoberfläche 23, insbesondere die momentane Bearbeitungsstelle des Laserstrahls 15 zur Erzeugung des Schnittspalts 25, gerichtet. Das Werkstückteil 10 wird schließlich im Freidschneidpunkt FP vom übrigen Werkstück bzw. Restwerkstück 9' gelöst (untere Abbildung), wodurch der Schneidprozess beendet wird.

Unmittelbar nach dem Freischneiden des Werkstückteils 10 im Freischneidpunkt FP wird der Laserstrahl 15 in einem dritten Schritt III ausgeschaltet. Der Rand des ausgeschnittenen Werkstückteils 10 ist durch die Schneidkontur S gegeben. Nach dem Ausschneiden des Werkstückteils 10 und Erzeugen des Schnittspalts 25 verbleibt im Restwerkstück 9' die zur Schneidkontur S komplementäre Schneidkontur S'. Der Schnittspalt 25 wird durch die Schneidkontur S des Werkstückteils 10 und die komplementäre Schneidkontur S' des Restwerkstücks 9' begrenzt.

Anschließend wird in einem vierten Schritt IV der Schneidkopf 3 unmittelbar nach Ausschalten des Laserstrahls 15 vom ausgeschnittenen Werkstückteil 10 entfernt, wobei der Schneidkopf 3, ausgehend vom Freischneidpunkt FP, in Richtung des Restwerkstücks 9' verfahren wird. Die Verfahrbewegung des Schneidkopfs 3 setzt sich aus zwei unmittelbar aufeinander folgenden Verfahrphasen zusammen (mittlere und obere Abbildung).

In einer unmittelbar nach dem Ausschalten des Laserstrahls 15 einsetzenden ersten Verfahrphase wird, wie durch den Pfeil angegeben, der Schneidkopf 3 in Schneidhöhe H, d.h. ohne Änderung des Abstands der Düse 20 von der Werkstückoberfläche 23, parallel zur Werkstückoberfläche 23 entlang eines Verfahrwegs s verfahren, bis der Freischneidpunkt FP in die Gassogzone B des Arbeitsgasstrahls 21 gelangt (mittlere Abbildung) . Hierbei wird der Schneidkopf 3 so verfahren, dass er zumindest eine Richtungs- bzw. Bewegungskomponente aufweist, die am Freischneidpunkt FP senkrecht zur Schneidkontur S zum Restwerkstück 9 hin gerichtet ist. Um zu erreichen, dass der Freischneidpunkt FP möglichst schnell in die Gassogzone B gelangt, ist es bevorzugt, dass der Schneidkopf 3 am Freischneidpunkt FP senkrecht zu Schneidkontur S bzw. senkrecht zu der zur Schneidkontur S des Werkstückteils 10 komplementären Schneidkontur S' des Restwerkstücks 9' verfahren wird. Vorteilhaft wird der zum Freischneidpunkt FP komplementäre Freischneidpunkt FP' der komplementären Schneidkontur S' vom Schneidkopf 3 überfahren. Der Schneidkopf 3 muss hierbei einen Verfahrweg s zurücklegen, der größer ist als eine minimale Strecke $S_{min}$, die gegeben ist durch $S_{min}$ = max (tan $\alpha$ x H, W) + R (der größere Wert, gewählt aus einerseits dem Produkt von Tangens des Öffnungswinkels $\alpha$ des Gasaustrittskegels des Arbeitsgasstrahls 21 und Schneidhöhe H und andererseits der radialen Breite W der Düsenwand 24 der Düse 20, zu welchem der Radius R der Düsenöffnung 22 addiert wird). Falls das Produkt aus Tangens des Öffnungswinkel $\alpha$ des Gasaustrittskegels des Arbeitsgasstrahls 21 und Schneidhöhe H größer ist als die radiale Breite W der Düsenwand 24, bestimmt sich die minimale Strecke $S_{min}$ aus $S_{min}$ = tan $\alpha$ x H + R. Falls das Produkt aus Tangens des Öffnungswinkel $\alpha$ des Gasaustrittskegels des Arbeitsgasstrahls 21 und Schneidhöhe H kleiner ist als die radiale Breite W der Düsenwand 24, bestimmt sich die minimale Strecke $S_{min}$ aus $S_{min}$ = W + R. Vorzugsweise wird der Schneidkopf 3 in der ersten Verfahrphase so verfahren, dass auf den Freischneidpunkt FP ein möglichst großer Sog des umgelenkten Arbeitsgasstrahls 21, wie in Figur 5, Einfügung links oben, angegeben, in der Gassogzone B einwirkt.

Der Schneidkopf 3 wird in der ersten Verfahrphase nur so lange verfahren, bis sich der Freidschneidpunkt FP innerhalb des Arbeitsbereichs 26 der Gassogzone B befindet, in dem sich die Differenz von Umgebungsdruck und des auf das Werkstück 9 einwirkenden (Unter)Drucks um maximal 50%, stärker bevorzugt maximal 25%, noch stärker bevorzugt maximal 10%, von der Differenz von Umgebungsdruck und des auf das Werkstück 9 an einer Stelle maximalen Sogs einwirkenden (Unter)Drucks unterscheidet. Die erste Verfahrphase (d.h. die Bewegung des Schneidkopfs 3 relativ zum Werkstück 9 ohne Höhenänderung des Schneidkopfes 3) wird somit beendet, wenn sich der Freischneidpunkt FP innerhalb des Arbeitsbereichs 26 befindet. Beispielsweise beträgt der Verfahrweg s des Schneidkopfs 3 dem 1 bis 30-fachen, vorzugsweise dem 1 bis 20-fachen, stärker bevorzugt dem 2 bis 10-fachen und noch stärker bevorzugt dem 2 bis 8-fachen der Schneidhöhe H. In der Praxis liegt der Verfahrweg s beispielsweise im Bereich von 2 bis 15 mm. Die Verfahrbewegung des Schneidkopfs 3 entlang des Verfahrwegs s parallel zur Werkstückoberfläche 23 erfolgt so schnell, dass das ausgeschnittenen Werkstückteil 10 aufgrund seiner Trägheit und dem auf das Werkstückteil 10 im Freischneidpunkt FP einwirkenden Gassog nicht verkippen kann. Beispielsweise wird der Schneidkopf 3 so verfahren, dass der vollständige Verfahrweg s in maximal 0,5 Sekunden, vorzugsweise in maximal 0,4 Sekunden, stärker bevorzugt in maximal 0,3 Sekunden, noch stärker bevorzugt in maximal 0,2 Sekunden, und noch stärker bevorzugt in maximal 0,1 Sekunden zurückgelegt wird. In dem gezeigten Ausführungsbeispiel wird der Schneidkopf 3 in der ersten Verfahrphase entlang des Verfahrwegs s ohne Änderung des vertikalen Abstands von der Werkstückoberfläche 23 (d.h. in Schneidhöhe H) verfahren.

Bei einer vorteilhaften Variante wird der Schneidkopf 3 zunächst zur Werkstückoberfläche 23 hin verfahren, um den Abstand zur Werkstückoberfläche 23 zu vermindern, und anschließend entlang des Verfahrwegs s verfahren, wodurch die Sogwirkung auf das ausgeschnittene Werkstückteil 10 im Bereich des Freischneidpunkts FP in der Gassogzone B erhöht werden kann.

In einer sich an die erste Verfahrphase zeitlich unmittelbar anschließenden zweiten Verfahrphase wird der Schneidkopf 3 entlang eines zweiten Verfahrwegs s' mit einer Vergrößerung des vertikalen Abstands des Schneidkopfs 3 von der Werkstückoberfläche 23 verfahren (obere Abbildung). Der Verfahrwinkel $\beta$ des Verfahrwegs s' des Schneidkopfs 3 zur Senkrechten bemisst sich vorzugsweise in Abhängigkeit des Öffnungswinkels $\alpha$ des Gaskegels des Arbeitsgasstrahls 21 beim Austritt aus der Düse 20 und beträgt besonders bevorzugt $\beta$ = 180° - $\alpha$. Bei der vorstehend genannten Bemessungsregel für den Winkel $\beta$ bemisst sich der Winkel $\beta$ in derselben Drehrichtung wie der Winkel $\alpha$ zur Senkrechten (in Richtung auf die Werkstückoberfläche 23 betrachtet). Hierdurch kann erreicht werden, dass der Freischneidpunkt FP auch in der zweiten Verfahrphase innerhalb des Arbeitsbereichs 26 der Gassogzone B, nahe dem Minimum des negativen Gasdrucks, d.h. im Bereich relativ hoher, insbesondere maximaler, Sogwirkung der Gassogzone B verbleibt. Die zweite Verfahrphase endet, wenn der Schneidkopf 3 eine vorbestimmte bzw. vorbestimmbare maximale Höhe über der Werkstückoberfläche 23 erreicht hat, in der der Schneidkopf 3 anschließend ohne weitere Höhenzunahme verfahren oder abgesenkt wird, beispielsweise um einen weiteren Schneidprozess zum Ausschneiden eines weiteren Werkstückteils einzuleiten.

In dem gezeigten Ausführungsbeispiel wird der Arbeitsgasstrahl 21 nach Freischneiden des Werkstückteils 10 zeitgleich mit dem Laserstrahl 15 ausgeschaltet. Die Sogwirkung durch das nach Ausschalten des Arbeitsgasstrahls 10 noch nachströmende Gas genügt, um ein Verkippen des ausgeschnittenen Werkstückteils 10 zu verhindern. Bei einer vorteilhaften Variante wird der Arbeitsgasstrahl 21 mit einer zeitlichen Verzögerung nach dem Ausschalten des Laserstrahls 15 ausgeschaltet, um die Sogwirkung in der Gassogzone B zu erhöhen. Vorteilhaft wird der Arbeitsgasstrahl 21 zu diesem Zweck während oder vorzugsweise am Ende der ersten Verfahrphase, d.h. während oder vorzugsweise am Ende des ersten Verfahrwegs s des Schneidkopfs 3, ausgeschaltet. Denkbar ist auch, dass der Arbeitsgasstrahl 21 während oder am Ende der zweiten Verfahrphase, d.h. während oder vorzugsweise am Ende des zweiten Verfahrwegs s' des Schneidkopfs 3, ausgeschaltet, wird.

In dem anhand der Figuren 1 bis 8 veranschaulichten Ausführungsbeispiel wurde der Schneidprozess anhand eines Laserstrahls 15 erläutert. Denkbar wäre jedoch auch, hierfür ein anders Verfahren einzusetzen, beispielsweise Plasmaschneiden. Des Weiteren wurde ein relativ zum unbewegt gehaltenen Werkstück 9 in drei orthogonalen Raumrichtungen verfahrbarer Schneidkopf 3 beschrieben. Alternativ wäre es möglich, dass das Werkstück 9 relativ zum unbewegt gehaltenen Schneidkopf 3 verfahren wird. Weiterhin wäre es möglich, dass sowohl der Schneidkopf 3 als auch das Werkstück 9 relativ zum jeweils anderen verfahren werden.

Wie sich aus vorstehender Beschreibung ergibt, stellt die Erfindung einen Prozess und eine Laserschneidvorrichtung zur trennenden Bearbeitung eines platten- oder rohrförmigen Werkstücks zur Verfügung, durch die die Wahrscheinlichkeit für das Verkippen von freigeschnittenen Werkstückteilen erheblich reduziert wird. Dies begünstigt das nach dem Schneidprozess erfolgende Entladen der ausgeschnittenen Werkstückteile. Die Erfindung macht sich hierbei erstmals die Sogwirkung des von der Werkstückoberfläche umgelenkten Arbeitsgasstrahls zunutze. Die Werkstückteile können somit mit einer vergleichsweise hohen Packungsdichte auf dem Werkstück angeordnet werden, wodurch die Produktivität und Kosteneffizienz verbessert werden können. Auf die Verwendung von Microjoints kann in besonders vorteilhafter Weise verzichtet werden.

Bezugszeichenliste

| 1 | Laserschneidvorrichtung |
|---|---|
| 2 | Schneideinrichtung |
| 3 | Schneidkopf |
| 4 | Arbeitstisch |
| 5 | Werkstückauflage |
| 6 | Querträger |
| 7 | Führungsschlitten |
| 8 | Laserstrahlquelle |
| 9 | Werkstück |
| 9' | Restwerkstück |
| 10 | Werkstückteil |
| 11 | Auflageelement |
| 12 | Lücke |
| 13 | Tragpunktspitze |
| 14 | Auflageebene |
| 15 | Laserstrahl |
| 16 | Seitenrand |
| 17 | Gasdruckkraft |
| 18 | Gewichtskraft |
| 19 | Steuereinrichtung |
| 20 | Düse |
| 21 | Arbeitsgasstrahl |
| 22 | Düsenöffnung |
| 23 | Werkstückoberfläche |
| 24 | Düsenwand |

25  Schnittspalt

26  Arbeitsbereich


**Patentansprüche**

**1.** Prozess zur trennenden Bearbeitung eines Werkstücks (9) mittels eines von einem Schneidkopf (3) geführten Schneidstrahls (15) und eines vom Schneidkopf (3) geführten Arbeitsgasstrahls (21), welcher die folgenden sukzessiven Schritte (I) - (IV) umfasst:

(I) Verfahren des Schneidkopfs (3) und des Werkstücks (9) relativ zueinander derart, dass der Schneidkopf (3) in einer Schneidhöhe (H) über einer Werkstückoberfläche (23) des Werkstücks (9) positioniert wird,
(II) Ausschneiden eines Werkstückteils (10) aus dem Werkstück (9), wobei ein Restwerkstück (9') verbleibt, wobei der Schneidstrahl (15) entlang einer Schneidkontur (S) des Werkstückteils (10) geführt und das Werkstückteil (10) in einem Freischneidpunkt (FP) der Schneidkontur (S) vom Restwerkstück (9') vollständig getrennt wird,
wobei der Arbeitsgasstrahl (21) auf die Werkstückoberfläche (23) gerichtet und von der Werkstückoberfläche (23) umgelenkt wird, wobei durch den auf die Werkstückoberfläche (23) gerichteten Arbeitsgasstrahl (21) innerhalb einer Gasdruckzone (A) ein positiver Gasdruck auf das Werkstück (9) einwirkt und durch den von der Werkstückoberfläche (23) umgelenkten Arbeitsgasstrahl (21) innerhalb einer Gassogzone (B) ein negativer Gasdruck auf das Werkstück (9) einwirkt,
(III) Ausschalten des Schneidstrahls (15),
(IV) Verfahren des Schneidkopfs (3) und des Werkstücks (9) relativ zueinander derart, dass

a) in einer ersten Verfahrphase ohne eine Vergrößerung eines durch die Schneidhöhe (H) gegebenen vertikalen Abstands zwischen Schneidkopf (3) und Werkstückoberfläche (23) der Freischneidpunkt (FP) in die Gassogzone (B) gelangt, wobei der Schneidkopf in der ersten Verfahrphase ausgehend vom Freischneidpunkt (FP) in Richtung des Restwerkstücks (9') bewegt wird, wobei die Relativbewegung zwischen Schneidkopf (3) und Werkstück (9) in der ersten Verfahrphase beendet wird, wenn sich der Freischneidpunkt (FP) innerhalb eines Arbeitsbereichs (26) der Gassogzone (B) befindet, in dem sich der negative Gasdruck um maximal 50% von einem minimalen negativen Gasdruck der Gassogzone (B) unterscheidet, und
b) in einer sich an die erste Verfahrphase anschließenden zweiten Verfahrphase der vertikale Abstand zwischen Schneidkopf (3) und Werkstückoberfläche (23) vergrößert wird.

**2.** Prozess nach Anspruch 1, **dadurch gekennzeichnet, dass** die Relativbewegung zwischen Schneidkopf (3) und Werkstück (9) in der ersten Verfahrphase beendet wird, wenn sich der Freischneidpunkt (FP) in einem Arbeitsbereich (26) der Gassogzone (B) befindet, in dem sich der negative Gasdruck um maximal 25%, insbesondere maximal 10%, vom minimalen negativen Gasdruck der Gassogzone (B) unterscheidet.

**3.** Prozess nach Anspruch 1 oder 2, **dadurch gekennzeichnet, dass** der Schneidkopf (3) und das Werkstück (9) relativ zueinander so verfahren werden, dass sich der Freischneidpunkt (FP) zumindest während eines Teils der zweiten Verfahrphase, insbesondere während der vollständigen zweiten Verfahrphase, innerhalb des Arbeitsbereichs (26) der Gassogzone (B) befindet.

**4.** Prozess nach einem der Ansprüche 1 bis 3, **dadurch gekennzeichnet, dass** der Schneidkopf (3) und das Werkstück (9) in der ersten Verfahrphase relativ zueinander so verfahren werden, dass der vertikale Abstand zwischen Schneidkopf (3) und Werkstückoberfläche (23) nicht verändert wird.

**5.** Prozess nach einem der Ansprüche 1 bis 3, **dadurch gekennzeichnet, dass** der Schneidkopf (3) und das Werkstück (9) in der ersten Verfahrphase relativ zueinander so verfahren werden, dass der vertikale Abstand zwischen Schneidkopf (3) und Werkstückoberfläche (23) verringert wird.

**6.** Prozess nach einem der Ansprüche 1 bis 5, **dadurch gekennzeichnet, dass** der Schneidkopf (3) und das Werkstück (9) in der ersten Verfahrphase relativ zueinander so verfahren werden, dass der Schneidkopf (9), ausgehend vom Freischneidpunkt (FP), senkrecht zur Schneidkontur (S) des Werkstückteils (10) bewegt wird.

**7.** Prozess nach einem der Ansprüche 1 bis 6, **dadurch gekennzeichnet, dass** die Relativbewegung zwischen Schneidkopf (3) und Werkstück (9) in der ersten Verfahrphase beendet wird, wenn ein vom Schneidkopf (3) relativ zum Werkstück (9) zurückgelegter Verfahrweg (s) dem 1 bis 30-fachen, insbesondere dem 1 bis 20-fachen, insbesondere dem 2 bis 10-fachen, und insbesondere dem 2 bis 8-fachen, der Schneidhöhe (H) entspricht.

8. Prozess nach einem der Ansprüche 1 bis 7, **dadurch gekennzeichnet, dass** der Schneidkopf (3) und das Werkstück (9) in der ersten Verfahrphase relativ zueinander so verfahren werden, dass der Freischneidpunkt (FP) in maximal 0,5 Sekunden, insbesondere maximal 0,4 Sekunden, insbesondere maximal 0,3 Sekunden, insbesondere maximal 0,2 Sekunden, insbesondere maximal 0,1 Sekunden, in den Arbeitsbereich (26) der Gassogzone (B) gelangt.

9. Prozess nach einem der Ansprüche 1 bis 8, **dadurch gekennzeichnet, dass** der Arbeitsgasstrahl (21) nach Freischneiden des Werkstückteils (10) mit einer von Null verschiedenen zeitlichen Verzögerung nach Ausschalten des Schneidstrahls (15) ausgeschaltet wird.

10. Prozess nach einem der Ansprüche 1 bis 9, **dadurch gekennzeichnet, dass** der Arbeitsgasstrahl (21) während der ersten Verfahrphase, oder nach der ersten Verfahrphase, oder während der zweiten Verfahrphase, oder nach der zweiten Verfahrphase ausgeschaltet wird.

11. Prozess nach einem der Ansprüche 1 bis 10, **dadurch gekennzeichnet, dass** der Schneidkopf (3) und das Werkstück (9) relativ zueinander so verfahren werden, dass das ausgeschnittene Werkstückteil (10) in der zweiten Verfahrphase vom Schneidkopf (3) nicht überquert wird.

12. Schneidvorrichtung (1), insbesondere Laserschneidvorrichtung, zur trennenden Bearbeitung eines Werkstücks (9), welche umfasst:

- eine Schneideinrichtung (2) mit einem Schneidkopf (3) zur Führung eines Schneidstrahls (15) zur trennenden Bearbeitung des Werkstücks und eines Arbeitsgasstrahls (21) über das Werkstück (9),
- einen Arbeitstisch (4) mit einer Werkstückauflage (5) für das Werkstück (9), wobei die Werkstückauflage (5) eine Vielzahl von Auflageelementen (11) aufweist, wobei zwischen zwei einander benachbarten Auflageelementen (11) eine Lücke (12) gebildet wird,
- eine elektronische Steuereinrichtung (19) zur Steuerung/Regelung der trennenden Bearbeitung des Werkstücks (9), welche zur Durchführung des Prozesses nach einem der Ansprüche 1 bis 11 programmtechnisch eingerichtet ist.

13. Programmcode für eine zur Datenverarbeitung geeignete elektronische Steuereinrichtung für eine Schneidvorrichtung (1) gemäß Anspruch 12, welcher Steuerbefehle enthält, die die Steuereinrichtung (19) zur Durchführung des Prozesses nach einem der Ansprüche 1 bis 11 veranlassen.

14. Computerprogrammprodukt mit einem gespeicherten Programmcode für eine zur Datenverarbeitung geeignete elektronische Steuereinrichtung (19) für eine Schneidvorrichtung (1) gemäß Anspruch 12, welcher Steuerbefehle enthält, die die Steuereinrichtung (19) zur Durchführung des Prozesses nach einem der Ansprüche 1 bis 11 veranlassen.

**Claims**

1. Process for cutting machining of a workpiece (9) by means of a cutting beam (15) guided by a cutting head (3) and a working gas beam (21) guided by the cutting head (3), comprising the following successive steps (I) - (IV):

(I) Moving of the cutting head (3) and the workpiece (9) relative to each other so that the cutting head (3) is positioned at a cutting height (H) above a workpiece surface (23) of the workpiece (9),
(II) Cutting of a workpiece part (10) out of the workpiece (9) thus leaving a residual workpiece (9'), wherein the cutting beam (15) is guided along the cutting contour (S) of the workpiece part (10) and the workpiece part (10) is completely separated from the residual workpiece (9') in a cut-out point (FP) of the cutting contour (S), wherein the working gas beam (21) is directed on the workpiece surface (23) and deflected by the workpiece surface (23), wherein by the working gas beam (21) directed on the workpiece surface (23) within a gas pressure zone (A) a positive gas pressure acts on the workpiece (9) and by the working gas beam (21) deflected by the workpiece surface (23) within a gas suction zone (B) a negative pressure acts on the workpiece (9),
(III) Turning off the cutting beam (15)

(IV) Moving the cutting head (3) and the workpiece (9) relative to each other, such that

a) in a first movement phase without an enlargement of a vertical distance between the cutting head (3) and the workpiece surface (23) as given by the cutting height (H) the cut-out point (FP) is positioned in the gas suction zone (B), wherein the cutting head (3) in the first movement phase, starting from the cut-out point (FP), is moved into the direction of the residual workpiece (9'), wherein the relative movement between the cutting head (3) and the workpiece (9) is ended in the first movement phase if the cut-out point (FP) is located within a working region (26) of the gas suction zone (B) in which the negative gas pressure differs by a maximum of 50% from a minimum negative gas pressure of the gas suction zone (B), and

b) in a second movement phase subsequent to the first movement phase, the vertical distance between the cutting head (3) and the workpiece surface (23) is increased.

2. Process according to claim 1, **characterized in that** the relative movement between the cutting head (3) and the workpiece (9) is ended in the first movement phase if the cut-out point (FP) is located in a working region (26) of the gas suction zone (B), in which the negative gas pressure differs by a maximum of 25%, in particular by a maximum of 10%, from the minimum negative gas pressure of the gas suction zone (B).

3. Process according to claim 1 or 2, **characterized in that** the cutting head (3) and the workpiece (9) are moved relative to each other such that the cut-out point (FP) is located within the working region (26) of the gas suction zone (B) at least during part of the second movement phase, in particular during the complete second movement phase.

4. Process according to one of claims 1 to 3, **characterized in that** the cutting head (3) and the workpiece (9) are moved relative to each other in the first movement phase such that the vertical distance between the cutting head (3) and the workpiece surface (23) is not changed.

5. Process according to one of claims 1 to 3, **characterized in that** the cutting head (3) and the workpiece (9) are moved relative to each other in the first movement phase such that the vertical distance between the cutting head (3) and the workpiece surface (23) is reduced.

6. Process according to one of claims 1 to 5, **characterized in that** the cutting head (3) and the workpiece (9) are moved relative to each other in the first movement phase such that the cutting head (3), starting from the cut-out point (FP), is moved perpendicular to the cutting contour (S) of the workpiece part (10).

7. Process according to one of claims 1 to 6, **characterized in that** the relative movement between the cutting head (3) and the workpiece (9) is ended in the first movement phase if a travel path (s) of the cutting head (3) travelled relative to the workpiece (9) corresponds to the 1 to 30 fold, in particular 1 to 20 fold, in particular 2 to 10 fold and in particular 2 to 8 fold of the cutting height (H).

8. Process according to one of claims 1 to 7, **characterized in that** the cutting head (3) and the workpiece (9) are moved relative to each other in the first movement phase such that the cut-out point (FP) reaches the working region (23) of the gas suction zone (B) in a maximum of 0.5 seconds, in particular in a maximum of 0.4 seconds, in particular in a maximum of 0.3 seconds, in particular in a maximum of 0.2 seconds, in particular in a maximum of 0.1 seconds.

9. Process according to one of claims 1 to 8, **characterized in that** the working gas beam (21) is turned off after cutting out the workpiece part (10) with a time delay different from zero after turning off the cutting beam (15).

10. Process according to one of claims 1 to 9, **characterized in that** the working gas beam (21) is turned off during the first movement phase or after the first movement phase or during the second movement phase or after the second movement phase.

11. Process according to one of claims 1 to 10, **characterized in that** the cutting head (3) and the workpiece (9) are moved relative to each other such that the cut-out workpiece part (10) in the second movement phase is not crossed by the cutting head (3).

12. Cutting machine (1), in particular laser cutting machine, for the cutting machining of a workpiece (9), comprising:

- a cutting device (2) with a cutting head (3) for guiding a cutting beam (15) for the cutting machining of the workpiece (9) and for guiding a working gas beam (21) over the workpiece (9),
- a worktable (4) with a workpiece support (5) for the workpiece (9), wherein the workpiece support (5) comprises a plurality of support elements (11), wherein between two adjacent support elements (11) a gap (12) is formed,
- an electronic control device (19) for controlling/regulating the cutting machining of the workpiece (9), set up in a programmed manner to carry out the process according to one of claims 1 to 11.

13. Program code for an electronic control device for a cutting arrangement (1) according to claim 12 implemented for data processing, which contains control commands that operate the control device (19) to carry out the process according to one of claims 1 to 11.

14. Computer program product with a stored program code for an electronic control device (19) for a cutting arrangement (1) according to claim 12 implemented for data processing, which contains control commands that operate the control device (19) to carry out the process according to one of claims 1 to 11.

**Revendications**

1. Processus pour le traitement par séparation d'une pièce à usiner (9) au moyen d'un faisceau de découpage (15) conduit par une tête de coupe (3) et un faisceau de gaz de travail (21) de la tête de coupe (3), qui comprend les étapes successives suivantes (I)-(IV) :

   (I) déplacement de la tête de coupe (3) et la pièce à usiner (9) l'une par rapport à l'autre de telle manière que la tête de coupe (3) est positionnée à une hauteur de coupe (H) au-dessus d'une surface (23) de la pièce à usiner (9),
   (II) découpe dans la pièce à usiner (9) d'une portion de pièce à usiner (10), où un restant de la pièce à usiner (9') demeure,
   où le faisceau de découpage (15) est guidé le long d'un contour de découpe (S) de la portion de pièce à usiner (10) et la portion de pièce à usiner (l0) est complètement séparée du restant de la pièce à usiner (9') dans un point de coupe libre (FP) du contour de découpe (S),
   où le faisceau de gaz de travail (21) est dirigé sur la surface (23) de la pièce à usiner et dévié par la surface (23) de la pièce à usiner, où par le faisceau de gaz de travail (21) dirigé sur la surface (23) de la pièce à usiner une pression de gaz positive à l'intérieur d'une zone de pression de gaz (A) agit sur la pièce à usiner (9) et par le faisceau de gaz de travail (21) détourné par la surface (23) de la pièce à usiner à l'intérieur d'une zone d'aspiration de gaz (B) une pression négative agit sur la pièce à usiner (9),
   (III) désactivation du faisceau de découpage (15),
   (IV) déplacement de la tête de coupe (3) et la pièce à usiner (9) l'une par rapport à l'autre de telle manière que

   a) dans une première phase de déplacement sans grossissement d'un écart vertical donné par la hauteur de coupe (H) entre la tête de coupe (3) et la surface de pièce à usiner (23) le point de coupe libre (FP) atteint la zone d'aspiration de gaz (B), où la tête de coupe dans la première phase de déplacement est déplacée à partir du point de coupe libre (FP) en direction du restant de la pièce à usiner (9'), où le déplacement relatif entre la tête de coupe (3) et la pièce à usiner (9) dans la première phase de déplacement prend fin, quand le point de coupe libre (FP) se trouve à l'intérieur d'un espace de travail (26) de la zone d'aspiration de gaz (B), dans lequel la pression négative du gaz diffère de la pression négative minimale de la zone d'aspiration de gaz (B) par un maximum de 50 %,
   et
   b) dans une deuxième phase de déplacement à la suite de la première phase de déplacement l'écart vertical entre la tête de coupe (3) et la surface de la pièce à usiner (23) est augmenté.

2. Processus selon la revendication I, **caractérisé en ce que** le déplacement relatif entre la tête de coupe (3) et la pièce à usiner (9) dans la première phase de déplacement prend fin, quand le point de coupe libre (FP) se trouve à l'intérieur d'un espace de travail (26) de la zone d'aspiration de gaz (B), dans lequel la pression négative du gaz diffère de la pression négative minimale de la zone d'aspiration de gaz (B) par un maximum de 25%, en particulier un maximum de 10 %.

3. Processus selon la revendication I ou 2, **caractérisé en ce que** la tête de coupe (3) et la pièce à usiner (9) sont déplacées l'une par rapport à l'autre de telle manière que le point de coupe libre (FP) du moins pendant une partie de la deuxième phase de déplacement se trouve à l'intérieur de l'espace de travail (26) de la zone d'aspiration de gaz (B), en particulier pendant la deuxième phase complète de déplacement, à l'intérieur de la zone de travail (26) de la zone d'aspiration de gaz (B).

4. Processus selon l'une des revendications 1 à 3, **caractérisé en ce que** dans la première phase de déplacement la tête de coupe (3) et la pièce à usiner (9) sont déplacées l'une par rapport à l'autre de telle manière que l'écart vertical entre la tête de coupe (3) et la surface de la pièce à usiner (23) reste inchangé.

5. Processus selon l'une des revendications 1 à 3, **caractérisé en ce que** dans la première phase de déplacement la tête de coupe (3) et la pièce à usiner (9) sont déplacées l'une par rapport à l'autre de telle manière que l'écart vertical entre la tête de coupe (3) et la surface de la pièce à usiner (23) est réduit.

6. Processus selon l'une des revendications 1 à 5, **caractérisé en ce que** dans la première phase de déplacement la tête de coupe (3) et la pièce à usiner (9) sont déplacées l'une par rapport à l'autre de telle manière que la tête de coupe (9), à partir du point de coupe libre (FP), est déplacé perpendiculaire par rapport au contour de coupe (S) de la portion de la pièce à usiner (10).

7. Processus selon l'une des revendications 1 à 6, **caractérisé en ce que** le déplacement relatif entre la tête de coupe (3) et la pièce à usiner (9) dans la première phase de déplacement prend fin, quand un trajet (s) parcouru par la tête de coupe (3) par rapport à la pièce à usiner (9) correspond à 1 à 30 fois, en particulier de 1 à 20 fois, en particulier de 2 à 10 fois et en particulier de 2 à 8 fois la hauteur de coupe (H).

8. Processus selon l'une des revendications 1 à 5, **caractérisé en ce que** dans la première phase de déplacement la tête de coupe (3) et la pièce à usiner (9) sont déplacées l'une par rapport à l'autre de telle manière que le point de coupe libre (FP) atteint l'espace de travail (26) de la zone d'aspiration de gaz (B) en un maximum de 0,5 secondes, en particulier un maximum de 0,4 secondes, en particulier un maximum de 0,3 secondes, en particulier un maximum de 0,2 secondes, en particulier un maximum de 0, 1 secondes.

9. Processus selon l'une des revendications 1 à 8, **caractérisé en ce que** le faisceau de gaz de travail (21) après le dégagement par coupe de la portion de la pièce à usiner (10) est éteint avec un temps de retard différent de zéro après l'extinction du faisceau de coupe (15).

10. Processus selon l'une des revendications 1 à 9, **caractérisé en ce que** le faisceau de gaz de travail (21) est désactivé au cours de la première phase de déplacement, ou après la première phase de déplacement, ou au cours de la deuxième phase de déplacement ou après la deuxième phase de déplacement.

11. Processus selon l'une des revendications 1 à 10, **caractérisé en ce que** la tête de coupe (3) et la pièce à usiner (9) sont déplacées l'une par rapport à l'autre de telle manière que la portion découpée de la pièce à usiner (10) n'est pas franchie par la tête de coupe (3) dans la deuxième phase de déplacement.

12. Dispositif de coupe (1), en particulier un dispositif de coupe laser pour l'usinage par séparation d'une pièce à usiner (9), qui comprend :

   - un moyen de coupe (2) avec une tête de coupe (3) pour guider un faisceau de découpage (15) pour l'usinage par séparation de la pièce à usiner et un faisceau de gaz de travail (21) sur la pièce à usiner (9),
   - une table de travail (4) avec un support de pièce à usiner (5) pour la pièce à usiner (9), où le support de la pièce à usiner (5) a une variété d'éléments de soutien (11), où entre deux éléments adjacents de soutient (11) un écart (12) est formé,
   - un dispositif de commande électronique (19) pour la commande de l'usinage par séparation de la pièce à usiner (9), qui est programmé pour exécuter le processus selon l'une des revendications 1 à 11.

13. Code de programme pour un dispositif de commande électronique approprié pour le traitement des données pour un dispositif de coupe (1) selon la revendication 12, qui contient des instructions de commande pour déclencher l'appareil de commande (19) pour exécuter le processus selon l'une des revendications 1 à 11.

14. Produit programme informatique avec un code de programme stocké pour un dispositif de commande électronique approprié pour le traitement des données pour un dispositif de coupe (1) selon la revendication 12, qui contient des instructions de commande pour déclencher l'appareil de commande (19) pour exécuter le processus selon l'une des revendications 1 à 11.

FIG. 1

FIG. 2

FIG. 3

FIG. 4

FIG. 5

# FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6609044 B1